(19) Europäisches Patentamt
European Patent Office
Office européen des brevets

(11) Publication number: **0 338 059 B1**

(12) # EUROPEAN PATENT SPECIFICATION

(45) Date of publication of patent specification: **21.04.93**

(51) Int. Cl.[5]: **C09K 19/02**, C09K 19/42, G02F 1/137

(21) Application number: **88909475.1**

(22) Date of filing: **15.10.88**

(86) International application number: **PCT/EP88/00928**

(87) International publication number: **WO 89/03867 (05.05.89 89/10)**

The file contains technical information submitted after the application was filed and not included in this specification

(54) **IMPROVED LIOUID CRYSTAL MIXTURE.**

(30) Priority: **19.10.87 JP 263148/87**
**12.01.88 EP 88100274**

(43) Date of publication of application:
**25.10.89 Bulletin 89/43**

(45) Publication of the grant of the patent:
**21.04.93 Bulletin 93/16**

(84) Designated Contracting States:
**CH DE FR GB LI NL**

(56) References cited:
**EP-A- 0 151 446**
**EP-A- 0 174 541**
**WO-A-87/05714**

(73) Proprietor: **CASIO COMPUTER COMPANY LIMITED**
**6-1, 2-chome, Nishi-Shinjuku**
**Shinjuku-ku Tokyo 160(JP)**

Proprietor: **MERCK PATENT GESELLSCHAFT MIT BESCHRÄNKTER HAFTUNG**
**Frankfurter Strasse 250 Postfach 4119**
**W-6100 Darmstadt(DE)**

(72) Inventor: **YOSHIDA, Tetsushi**
**1108, Higashiasakawa-cho**
**Hachioji-city Tokyo(JP)**
Inventor: **SCHEUBLE, Bernhard**
**Bluff 100 100-1 Yamate-cho**
**Naka-ku Yokohama-Shi Kanagawa 231(DE)**
Inventor: **OYAMA, Takamasa**
**Komachi corp. 207 2-1-3 Fukami-nishi**
**Yamato-city Kanagawa(JP)**

(74) Representative: **Schüttler, Reinhard, Dr.**
**Merck Patent GmbH Postfach 4119**
**W-6100 Darmstadt 1 (DE)**

EP 0 338 059 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to the improvement of a twisted nematic liquid crystal display device operating in the high multiplex mode with a very high contrast and with a particularly steep electro-optical characteristic. The device is operating in the first Gooch and Tarry transmission minimum. The invention furthermore relates to new liquid crystal mixtures which are most suited for use of matrix type liquid crystal display devices driven by time sharing and which have a ratio of the elastic constants $K_3/K_1$ as small as possible but not more than 0.8 and a ratio of $\Delta\epsilon/\epsilon_\perp$ of at most 0.5. Such dielectrics are used in the matrix type liquid crystal display devices driven by time sharing according to the invention.

The properties of nematic or nematic-cholesteric liquid-crystalline materials are utilized for liquid-crystal display elements in order to effect significant changes in their optical properties, such as light transmission, light scattering, birefringence, reflectance or color, under the influence of electric fields. The functioning of display elements of this type is based here, for example, on the phenomena of dynamic scattering, the deformation of aligned phases or the Schadt-Helfrich effect in the twisted cell.

Among these usual types of liquid-crystal display elements, especially those based on the twisted nematic cell (TN cell) have gained particular importance recently, because they can be operated with relatively low control voltages which can be readily made available even by small batteries Moreover, these display elements have hitherto been the best which can be constructed as matrix display elements which allow the presentation of a high information density without an intolerably large number of control lines, lead-ins and lead-outs.

When used in practice, however, the TN cell, in particular in the form of matrix display elements, still raises considerable difficulties. These include above all the more or less pronounced dependence of the contrast on the angle of observation and the restricted multiplexing capacity.

Conventional dielectrics for TN cells have a ratio of the elastic constants $K_3/K_1$ of approximately 1.2-1.3 and $\Delta\ \epsilon/\epsilon_\perp$ above 1.0. Such conventional liquid crystal compositions are widely used in commercial twisted nematic display devices and disclosed in many references, e.g. Published Unexamined Japanese Patent Applications No. 56-105 510 and 56-105 511 and U.S. Patent 4,285,829. In these compositions, design is made based on the concept that the proportion of liquid crystal compounds having a distinct positive dielectric anisotropy generally is 30 % or more. These compositions are characterized in that the threshold voltages are in the range of 1 to 2 volts in most cases.

Operation margin and contrast of liquid crystal elements are determined by voltage-luminance property. Namely, as the change in transmittance to the change in intensity of electric field applied to liquid crystal is sharp, allowance for the operation margin can be large and contrast can be enhanced. Sharpness in voltage-luminance property is expressed by ratio $\gamma$ of voltage $V_{50}$ in which transmittance becomes 50 % to threshold voltage $V_c$. As the $\gamma$ value approximates to 1, the aforesaid change in transmittance is sharp so that operation margin can broadened and contrast can be increased.

Further visual angle property depends on the product $\Delta n.d$ of layer thickness d of liquid crystal and refractive index anisotropy $\Delta n$ of liquid crystal. That is, in case that $\Delta n.d$ is large, an apparent rate of change in $\Delta n.d$ is large when viewed from the oblique direction of liquid crystal so that visual characteristic is poor; when $\Delta n.d$ is small, visual characteristic is good.

Furthermore, time sharing-driven liquid crystal elements have an increased time sharing number and one selection period becomes short so that it is required that a response speed be fast. This response speed depends most greatly on the intensity of an electric field applied to liquid crystal. Namely, a thin layer thickness d of liquid crystal provides an intense intensity of electric field so that liquid crystal molecules behave at a high speed.

As has been described above, matrix type liquid crystal display devices which are driven by high time sharing require that:

(1) The $\gamma$ property should approximate to 1.
(2) Visual angle should be broad.
(3) Response speed should be fast.

Research on the properties such as $\gamma$ value of the like in liquid crystal display elements has been made by M. Schadt et al. According to the research, it is known that sharpness $\gamma$ in voltage-luminance property as expressed by equation (1) described below well complies with the property shown by actual elements.

$$\gamma = \frac{V_{50}}{V_c} = \left(2.04 - \frac{1.044}{1 + K_{33}/K_{11}}\right) \cdot \left\{1 + 0.123\left[\left(\frac{\Delta\varepsilon}{\varepsilon\perp}\right)^{0.6} - 1\right]\right\} \cdot \left[1 + 0.132 \ln\left(\frac{\Delta n.d}{2\lambda}\right)\right] \quad \ldots(1)$$

wherein:

- $V_{50}$ : voltage applied when transmittance becomes 50 %
- $V_c$: threshold voltage
- $K_{33}/K_{11}$: elasticity constant ratio of liquid crystal
- $\Delta\epsilon$: anisotropy in dielectric constant of liquid crystal
- $\epsilon\perp$: dielectric constant in the direction perpendicular to the molecular axis of liquid crystal
- $\Delta n$: anisotropy in refractive index of liquid crystal
- d: layer thickness of liquid crystal

According to the equation (1), it is clear that for approximating $\gamma$ to 1, the first, second and third members of the equation should approximate to 1, respectively. Accordingly, conventional time sharing-driven liquid crystal devices were designed to satisfy the following requirements simultaneously:

(a) $K_{33}/K_{11}$ should be small.

(b) $\Delta\epsilon/\epsilon\perp$ should be small.

(c) The value of $\Delta n.d$ should be 1.1 ($\mu$m) when wavelength of an incident light is 550 nm.

In this case, influence by $\Delta n.d$ appears most significantly so that the value of $\Delta n.d$ is most predominantly determined. In order to make $\Delta\epsilon/\epsilon\perp$ small, $\Delta\epsilon$ must be made small. However, liquid crystal having small $\Delta\epsilon$ has a slow response speed. Therefore, $\Delta\epsilon$ cannot be made small.

From the foregoing circumstances, with respect to conventional liquid crystal compositions, it is apparent that merely those having $K_{33}/K_{11}$ above 1.2-1.3 and $\Delta\epsilon/\epsilon\perp$ above 1.0 are used. Conventional liquid crystal compositions are widely used in commercial TN liquid crystal elements and, for example, Published Unexamined Japanese Patent Application Nos. 56-105510 and 56-105511 and U.S. Patent No. 4,285,829. In these compositions, design is made based on the concept that the proportion of liquid crystal compounds having a distinct positive dielectric anisotropy generally is 30 % or more. As a result, these compositions are characterized in that the threshold voltages are in the range of 1 to 2 volts in most cases.

In operating the conventional liquid crystal compositions described above in time sharing-driven devices, the $\gamma$ property is not so improved since values of $K_{33}/K_{11}$ and $\Delta\epsilon/\epsilon\perp$ are not small. Further due to large $\Delta n.d$, visual angle property is also poor. In case that values of $K_{33}/K_{11}$ and $\Delta\epsilon/\epsilon\perp$ are increased, liquid crystal compounds having a small $K_{33}/K_{11}$ value generally have a high viscosity and a tendency to form smectic phases so that their response speed decreases. Further liquid crystal compositions having a small $\Delta\epsilon/\epsilon\perp$ value involve problems that their response speed becomes slow due to a small $\Delta\epsilon$ and a high voltage is required for operation.

EP-A-174 541 teaches TN LCD's with a steep electrooptical characteristic curve. Liquid crystal mixtures with pyrimidine compounds are disclosed in EP-A-151 446.

In view of the foregoing circumstances, an object of the present invention is to provide liquid crystal compositions for time sharing drive having small $K_{33}/K_{11}$ and small $\Delta\epsilon/\epsilon\perp$, in order to improve response speed, $\gamma$ property and visual angle property in time sharing-driven liquid crystal display devices.

It has now been surprisingly found that when values of $\Delta\epsilon/\epsilon\perp$ and $K_3/K_1$ of liquid crystal dielectrics become extremely small in time sharing-driven liquid crystal display devices, response speed and $\gamma$ property (the sharpness in voltage-luminance property) are markedly improved in such a range of d.$\Delta$n that does meet the requirements for the first Gooch and Tarry minimum. The liquid crystal dielectrics are most suited for use in liquid crystal display devices operating in the high multiplex mode and having a surprisingly improved contrast.

The present invention has been made based on a new finding that when values of $\Delta\epsilon/\epsilon\perp$ and $K_{33}/K_{11}$ of liquid crystal compositions become extremely small in time sharing-driven liquid crystal display devices, response speed and $\gamma$ property are markedly improved in such a range of $\Delta n.d$ that does not meet the

equation (1) described above and in this case, the liquid crystal compositions are most suited for use in time sharing-driven liquid crystal display devices.

It is an object of the invention to provide improved display devices, in which both a markedly improved contrast, and, simultaneously, also a high response speed are ensured by operating the display elements in the first transmission minimum according to Gooch and Tarry.

Upon further study of the specification and appended claims, further objects and advantages of this invention will become apparent to those skilled in the art.

It has now been found that, with a suitable choice of the liquid crystal parameters, it is possible, surprisingly, to obtain the desired properties by operating the display elements in the first transmission minimum.

A subject of the invention, therefore, is the improvement of a twisted nematic liquid crystal display device operating in the high multiplex mode and having a high contrast, wherein the liquid crystal mixture has a ratio of the elastic constants $K_3/K_1$ as small as possible but not more than 0.8 and a ratio of $\Delta\epsilon/\epsilon_\perp$ of at most +0.5. In many cases the electro-optical characteristic curve in the first transmission minimum is at least as steep or even steeper as that curve in the second such transmission minimum. The steepness in the second transmission minimum is measured in a display device which is identical to that operated in the first minimum except that the layer thickness is enlarged, in an appropriate manner for operation in the second minimum.

A further subject of the invention is a method of simultaneously minimizing the dependence of contrast on the angle of observation of an electro-optical display element based on a liquid crystal mixture and of maximizing its multiplexing capacity by maximizing its steepness of its characteristic curve, comprising operating the element in the first Gooch and Tarry transmission minimum, selecting a mixture having a $K_3/K_1$ ratio as small as possible but not more than 0.8 and a ratio of $\Delta\epsilon/\epsilon_\perp$ of at most 0.5.

The construction of the liquid crystal display element according to the invention from polarizers, electrode base plates and electrodes with such a surface treatment that the preferential orientation of the particular adjoining liquid crystal molecules is usually twisted by 90° from one electrode to the other, corresponds to the type of construction conventional for such display elements. The concept of the conventional type of construction is here taken in a very wide sense and also comprises all the variations and modifications, known from the literature, of the twisted nematic cell, and in particular also matrix display elements. An essential difference between the display elements according to the invention and those hitherto conventional and based on the twisted nematic cell is, however, the choice of the liquid crystal parameters in the liquid crystal layer. Whereas, for example, the $K_3/K_1$ ratio in the conventional liquid-crystalline phases for display elements of this type is at least > 0.8 and the $\Delta\epsilon/\epsilon_\perp$ ratio is normally between 1.2 and 1.7, the $K_3/K_1$ ratio in the display elements according to the invention is $\leqq$ 0.8 and $\Delta\epsilon/\epsilon_\perp$ is $\leqq$ 0.5. The $K_3/K_1$ ratio in the display elements according to the invention preferably is 0.4 to 0.8 and $\Delta\epsilon/\epsilon_\perp$ preferably is 0.04 to 0.3. Particularly preferred dielectrics are those, wherein $K_3/K_1$ is 0.2 to 0.75 and $\Delta\epsilon/\epsilon_\perp$ is 0.1 to 0.3.

The parameters used to define the invention are fully known to skilled workers. The contemplated definitions are to be found in many publications, e.g. W.E. De Jeu, Physical Properties of Liquid Crystal Materials, Gordon and Breach 1980 and the brochure "Liquid Crystals, Measurement of the Physical Properties" of E. Merck, whose disclosures are incorporated by reference herein.

The thickness of a liquid crystal layer of the display element according to the invention and/or the optical anisotropy $\Delta n$ of the liquid crystal material are chosen such that

$$d \,.\, \Delta n = \frac{\lambda}{2} \,.\, \sqrt{3}$$

the value of 550 nm, normally used for the maximum sensitivity of the human eye, being taken for the wavelength $\lambda$. The layer thicknesses of the display elements according to the invention can, for example, be within the range from 2 to 10 $\mu$m. Preferably, the smallest possible layer thicknesses are chosen, the lower limit of d being determined by the quality standards required for mass production. A particularly preferred range of d is thus 3 to 8 $\mu$m, in particular 4 to 7 $\mu$m.

Liquid-crystalline dielectrics, the material parameters of which are within the ranges according to the invention, can be prepared from conventional liquid-crystalline base materials. Numerous such materials are known from the literature. Preferably, the dielectrics according to the invention comprise at least five components. The dielectrics used for the display elements according to the invention comprise

(a) at least 10 wt% of a first liquid crystal material comprising at least one of liquid crystal compounds represented by general formula:

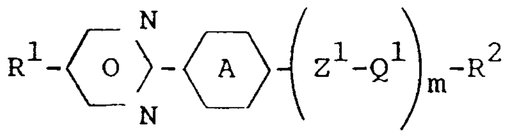

(I)

wherein $R_1$ represents a group R; and $R_2$ represents R or OR; R being in each case independently a straight chain alkyl group having up to 12 carbon atoms wherein one or two non-adjacent $CH_2$ groups may be replaced by -O-and/or -CH = CH-, two oxygen atoms not being directly attached to one another,

A is 1,4-phenylene or trans-1,4-cyclohexylene,

$Z^1$ is -CO-O-, -O-CO-, $-CH_2-O-$, $-OCH_2-$, $-CH_2CH_2-$or a single bond,

$Q^1$ is 1,4-phenylene or trans-1,4-cyclohexylene, and m is 0, 1 or 2,

(b) less than 10 wt% of a second liquid crystal material comprising one or more liquid crystal compounds having a distinct positive dielectric anisotropy ($\Delta\epsilon \geqq + 3$); and,

(c) less than 90 wt% of a third liquid crystal material comprising at least one liquid crystal compound having a negative or substantially O dielectric anisotropy.

The liquid crystal composition is composed of a liquid crystal compound of pyrimidine type, as a main component, having formulated therein a small quantity of a liquid crystal compound having a distinct positive $\Delta\epsilon$ value. The liquid crystal composition of the present invention can also be obtained by formulating a liquid crystal compound having a negative or substantially $0\Delta\epsilon$ value, in addition to the liquid crystal mixture described above. In the thus formulated liquid crystal composition, values of $K_{33}/K_{11}$ and $\Delta\epsilon/\epsilon\perp$ are reduced by the use of a liquid crystal having particularly large $K_{11}$ in large quantities and a liquid crystal having large $\epsilon\perp$ in large quantities and, the liquid crystal composition has a positive $\Delta\epsilon$ as a whole.

The second liquid crystal material can be absent if the first and third liquid crystal material is selected in such a manner that the resulting mixture has a slightly positive $\Delta\epsilon$ and a $\Delta\epsilon$ in the range of 0.04 to 0.3.

The liquid crystal compounds of pyrimidine type described above are preferably represented by general formula (Ia) described below.

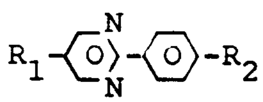

... (Ia)

wherein $R_1$ represents R; and $R_2$ represents R or OR, R being in each case independently a straight chain alkyl group having 1 to 12 carbon atoms wherein one or two nonadjacent $CH_2$ groups may be replaced by -O- or -CH = CH-, with two oxygen atoms not being directly attached to each other.

The liquid crystal compounds of pyrimidine type described above have a small $K_{33}/K_{11}$ value of approximately 0.55, and $K_{11}$ is as large as about $1.8 \times 10^{-2}$. Further $\Delta\epsilon$ is in a range of approximately +0.9 to +2.5. In the liquid crystal compounds represented by general formula (Ia), $R^1$ preferably is n-alkyl having 3 to 9 carbon atoms. $R^2$ preferably is ethyl, n-propyl or n-alkoxy having 5 to 9 carbon atoms.

In addition pyrimidines of formula Ia are preferred wherein $R^2$ is methoxy. Components of formula (Ia) wherein $R^1$ is n-alkyl of 6 to 9 carbon atoms and $R^2$ is n-alkoxy of 5 to 9 carbon atoms are preferably selected as components of the mixtures according to this invention. Especially preferred are components wherein $R^1$ is n-hexyl or n-heptyl and $R^2$ is n-pentyloxy, n-heptyloxy or n-nonyloxy.

As these liquid crystal compounds of pyrimidine type, preferably liquid crystal compounds shown in Table 1 are used. Their physical properties are also shown in the same table. Among the liquid crystal compounds exemplified in Table 1, preferably at least one of them is formulated to make the first liquid crystal material.

As the aforesaid liquid crystal compound having a distinct positive $\epsilon$ value, there can be used for example liquid crystal compounds of dioxane type, phenycyclohexane type, biphenyl type or pyrimidine type, which are used to render the $\epsilon$ value of the liquid crystal composition positive. The preferred liquid crystal compounds are represented by general formulas (II), (III), (IV), (V), etc.

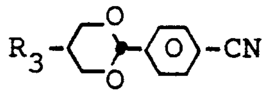 ... (II)

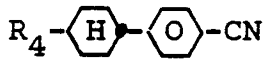 ... (III)

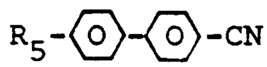 ... (IV)

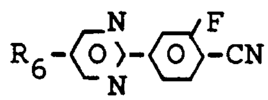 ... (V)

wherein $R_3$, $R_4$, $R_5$ and $R_6$ independently represent a straight chain alkyl group having 1 to 12 carbon atoms wherein one or two nonadjacent $CH_2$ groups may be replaced by -O- or -CH=CH-, with two oxygen atoms not being directly attached to each other.

Table 1

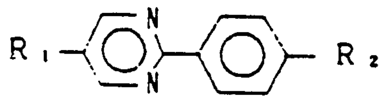

| $R_1$ | $R_2$ | $\Delta\varepsilon/\varepsilon_\perp$ | $\Delta n$ | mp. | cp. |
|---|---|---|---|---|---|
| $n-C_6H_{13}$ | $OCH_3$ | 0.5 | 0.15 | 51℃ | 30℃ |
| $n-C_6H_{13}$ | $n-OC_5H_{11}$ | 0.4 | 0.14 | 44 | 50 |
| $n-C_6H_{13}$ | $n-OC_6H_{13}$ | 0.3 | 0.18 | 32 | 61 |
| $n-C_6H_{13}$ | $n-OC_7H_{15}$ | 0.3 | 0.18 | 38 | 59 |
| $n-C_6H_{13}$ | $n-OC_9H_{19}$ | 0.3 | 0.18 | 37 | 62 |
| $n-C_7H_{15}$ | $OCH_3$ | 0.6 | 0.17 | 37 | 32 |
| $n-C_7H_{15}$ | $n-OC_7H_{15}$ | 0.4 | 0.14 | 45 | 68 |
| $n-C_7H_{15}$ | $n-OC_9H_{19}$ | 0.3 | 0.14 | 48 | 70 |
| $n-C_9H_{19}$ | $OCH_3$ | 0.5 | 0.15 | 40 | 41 |
| $n-C_9H_{19}$ | $n-OC_6H_{13}$ | 0.3 | 0.16 | 33 | 72 |
| $n-C_9H_{19}$ | $n-OC_9H_{19}$ | 0.3 | 0.13 | 34 | 75 |
| $n-C_3H_7$ | $C_2H_5$ | | 0.12 | 40 | −40 |
| $n-C_3H_7$ | $n-C_3H_7$ | | 0.15 | 53 | −30 |
| $n-C_5H_{11}$ | $n-C_3H_7$ | | 0.14 | 37 | −20 |
| $n-C_7H_{15}$ | $C_2H_5$ | | 0.17 | 21 | −70 |
| $n-C_7H_{15}$ | $-O-CH_2-CH=CH_2$ | 0.4 | 0.18 | 44 | 40 |

Table 2

| Chemical Formula | $\Delta\varepsilon / \varepsilon_{\perp}$ | $\Delta n$ | mp. | cp. |
|---|---|---|---|---|
| 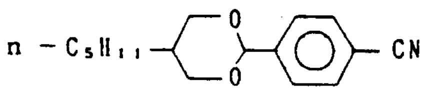 | 2.7 | 0.14 | 57 ℃ | 48 ℃ |
| 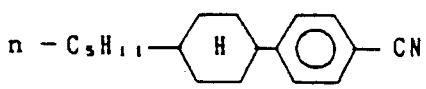 | 2.7 | 0.11 | 31 | 50 |
| 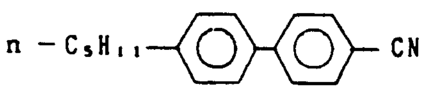 | 2.9 | 0.20 | 23 | 30 |
| 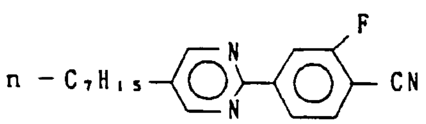 | 3.3 | 0.22 | 43 | 0 |
| 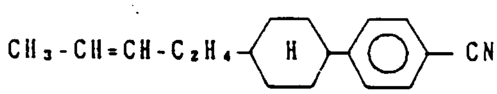 | — | — | 60 | 74 |
| 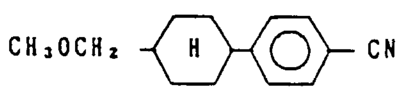 | — | — | 60 | 20 |

Under another aspect of the invention the second liquid crystal material comprises at least one of liquid crystal compounds represented by the general formulae IIf to IIh:

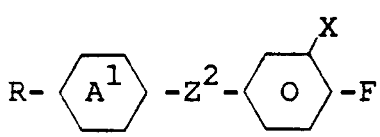

IIf

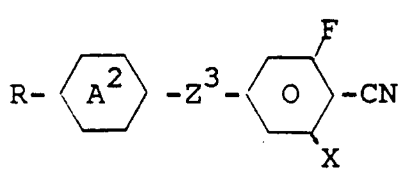

IIg

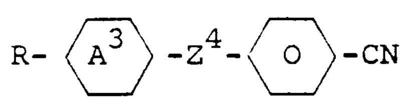

IIh

wherein

$A^1$ is

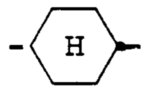, 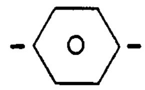, 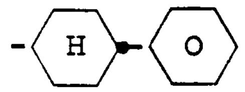,

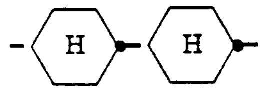, 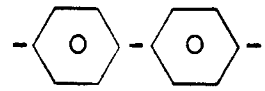,

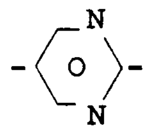, 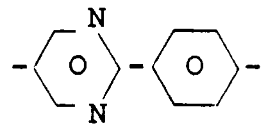, 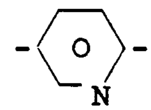

or 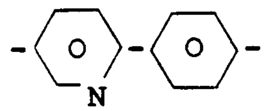,

Z² is -CO-O-, -O-CO-, $-CH_2CH_2-$ or a single bond,

X is hydrogen or fluorine,

A² and A³ are in each case

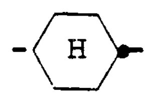, 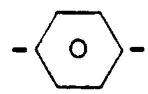,

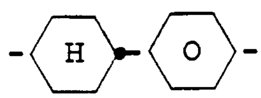, 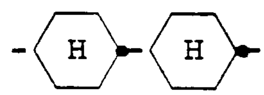 or

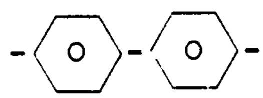,

$Z^3$ is -CO-O-, -O-CO-, $-CH_2O-$, $-CH_2CH_2-$ or a single bond,

$Z^4$ is -CO-O-, -O-CO- or $-CH_2CH_2-$, and

R being in each case independently a straight chain alkyl group having up to 12 carbon atoms, wherein one or two non-adjacent $CH_2$ groups may be replaced by -O- or -CH=CH-, two oxygen atoms not being directly attached to each other.

Preferred components of this type or those liquid crystal compounds represented by the general formulae

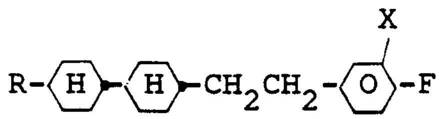

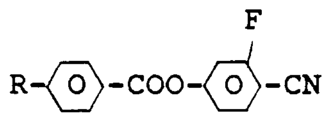

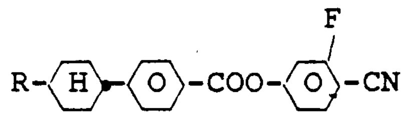

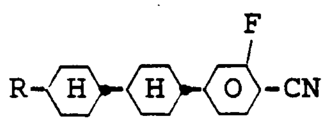

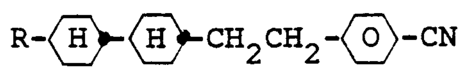

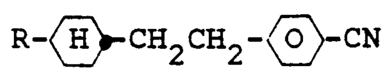

wherein R has the meaning given above for formulae IIf, g and h and x is hydrogen or fluorine.

The liquid crystal compounds have the dielectric anisotropy $\Delta\epsilon$ value is +3 or more; it is particularly desired that the $\Delta\epsilon$ value be in a range of +12 to +40 and viscosity $\eta$ value be 20 to 60 cp.

Liquid crystal compounds as shown in Table 2 can be used among others. Among the liquid crystal compounds exemplified in Table 2, preferably at least one compound is formulated to make the second liquid crystal material.

As the liquid crystal compound having a negative or substantially 0 $\Delta\epsilon$ value, there can be used liquid crystal compounds of phenylcyclohexane type (German Patent 26 36 684), phenyl cyclohexane carboxylates (German Patent 24 29 093), cyclohexyl cyclohexanes (USP 4,622,164), biphenylcyclohexanes (Japanese Patent 1,311,608), phenyl cyclohexylcyclohexane carboxylates (Japanese Patent 1,297,121), 1-phenyl-2-cyclohexylcyclohexylethanes (USP 4,606,845), cyclohexyl cyclohexylcyclohexane carboxylates (Japanese Patent 1,297,121), 4,4′-biscyclohexylbiphenyls (USP 4,331,552) and 4,4′-biscyclohexyl-2-fluorbiphenyls (USP 4,419,264). These liquid crystal compounds are low viscosity liquid crystal compounds for controlling viscosity, high temperature liquid crystal for raising N-I point and liquid crystals for suppressing smectic phases. As low viscosity liquid crystal compounds, there can be used liquid crystal compounds shown in Table 3 which show $\eta$ of approximately 6 to 20 mPa.s.

As high temperature liquid crystals, there can be used liquid crystal compounds shown in Table 4 having N-I point of approximately 130 to 330 °C. $\eta$ is approximately 13 to 65 mPa.s.

In all components of the liquid crystal compositions according to this invention R is preferably alkyl of 1 to 10 carbon atoms. A particularly preferred range is 1 to 5 carbon atoms.

The third liquid crystal material comprises preferably liquid crystal compounds having a dielectric anisotropy of -1 to +1. These liquid crystal compounds are represented by general formulas described below:

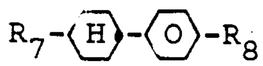 ... (VI)

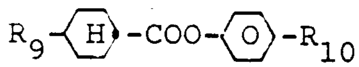 ... (VII)

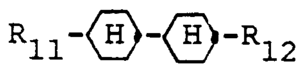 ... (VIII)

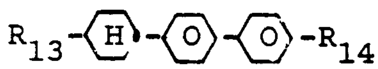 ... (IX)

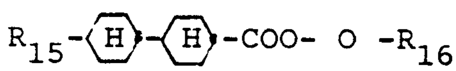 ... (X)

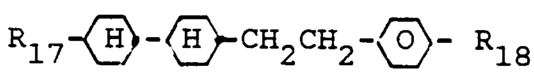 ... (XI)

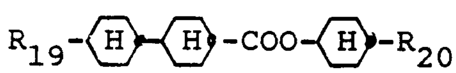 ... (XII)

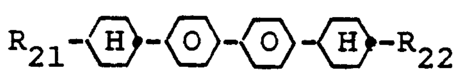 ... (XIII)

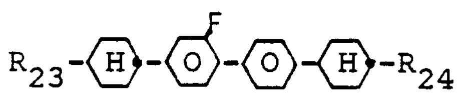 ... (XIV).

wherein $R_7$, $R_9$, $R_{11}$ and $R_{13}$ to $R_{24}$ represents R; and $R_8$, $R_{10}$ and $R_{12}$ represents R or OR, R being in each case indepently a straight chain alkyl group having 1 to 12 carbon atoms two oxygen atoms not being directly attached to each other.

Table 3

| 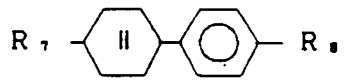 | | | | | |
|---|---|---|---|---|---|
| $R_7$ | $R_8$ | $\Delta\varepsilon/\varepsilon_\perp$ | $\Delta n$ | mp. | cp. |
| $n-C_5H_{11}$ | $n-C_3H_7$ | + 0.1 | 0.08 | −8 ℃ | −13 ℃ |
| $n-C_3H_7$ | $OCH_3$ | − 0.2 | 0.09 | 32 | 10 |
| $n-C_3H_7$ | $OC_2H_5$ | − 0.2 | 0.09 | 41 | 37 |
| $n-C_3H_7$ | $n-OC_4H_9$ | − 0.2 | 0.09 | 36 | 32 |
| $n-C_3H_7$ | $n-OC_5H_{11}$ | − 0.2 | 0.08 | 40 | 27 |
| $n-C_4H_9$ | $n-OC_4H_9$ | − 0.2 | 0.08 | 42 | 30 |
| $n-C_5H_{11}$ | $n-OC_5H_{11}$ | − 0.2 | 0.08 | 36 | 40 |
| $n-C_5H_{11}$ | $n-OC_6H_{13}$ | − 0.2 | 0.09 | 39 | 47 |

Table 4

| 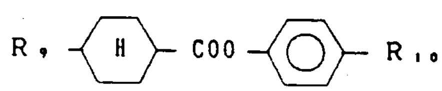 | | | | | |
|---|---|---|---|---|---|
| $R_9$ | $R_{10}$ | $\Delta\varepsilon/\varepsilon_\perp$ | $\Delta n$ | mp. | cp. |
| $n-C_5H_{11}$ | $n-C_5H_{11}$ | − 0.1 | 0.08 | 37 ℃ | 47 ℃ |
| $n-C_3H_7$ | $OCH_3$ | − 0.3 | 0.09 | 57 | 60 |
| $n-C_3H_7$ | $n-OC_2H_5$ | − 0.3 | 0.09 | 48 | 78 |
| $n-C_3H_7$ | $n-OC_4H_9$ | − 0.3 | 0.09 | 43 | 70 |
| $n-C_4H_9$ | $OCH_3$ | − 0.3 | 0.09 | 43 | 58 |
| $n-C_4H_9$ | $OC_2H_5$ | − 0.3 | 0.09 | 37 | 75 |
| $n-C_5H_7$ | $OCH_3$ | − 0.3 | 0.09 | 40 | 71 |

Table 5

| 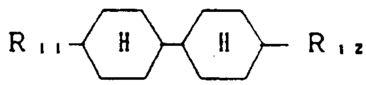 | | | | | |
|---|---|---|---|---|---|
| $R_{11}$ | $R_{12}$ | $\Delta\varepsilon / \varepsilon_{\perp}$ | $\Delta n$ | mp. | cp. |
| $n-C_3H_7$ | $OCH_3$ | − 0.1 | 0.04 | 9 ℃ | 10 ℃ |
| $n-C_3H_7$ | $OC_2H_5$ | − 0.2 | 0.03 | 49 | 30 |
| $n-C_3H_7$ | $n-OC_3H_7$ | − 0.2 | 0.04 | 14 | 30 |
| $n-C_5H_{11}$ | $OC_2H_5$ | − 0.1 | 0.04 | 35 | 40 |

These liquid crystal compounds are composed of low viscosity liquid crystal compounds for controlling visosity and high temperature liquid crystal compounds for raising N-I point. By selectively formulating these liquid crystal compounds, a tendency that smectic phases appear is suppressed.

As low viscosity liquid crystal compounds, there can be used liquid crystal compounds of general formulas (VI), (VII) and (VIII) shown in Tables 3, 4 and 5, respectively, which show $\eta$ of approximately 6 to 20 cp.

As high temperature liquid crystals, there can be used liquid crystal compounds of general formulas (IX), (X), (XI), (XII), (XIII) and (XIV) described above and shown in Tables 6, 7, 8, 9, 10 and 11, respectively. These high temperature liquid crystal compounds have a clearing point (N-I point) of approximately 130 °C to 330 °C.

Among these liquid crystal compounds, the liquid crystal compound represented by general formula (XI) has a viscosity of 13 to 19 mPa.s and is used to increase splay elasticity constant $K_{11}$.

Among the liquid crystal compounds represented by general formulae (VI) to (XIV), it is desired that the liquid crystal compounds used in the liquid crystal composition of the present invention are those in which R be an alkyl group having 1 to 10 carbon atoms. In particular, it is desired that R be an alkyl group having 1 to 5 carbon atoms.

At least one of the liquid crystal compounds shown in these Tables 6 to 11 is formulated to make the third liquid crystal material.

Table 6

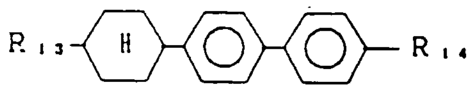

| $R_{13}$ | $R_{14}$ | $\Delta\varepsilon/\varepsilon_{\perp}$ | $\Delta n$ | mp. | cp. |
|---|---|---|---|---|---|
| $n-C_3H_7$ | $C_2H_5$ | 0.1 | 0.18 | 66℃ | 166℃ |
| $n-C_5H_{11}$ | $C_2H_5$ | 0.1 | 0.18 | 34 | 164 |
| $n-C_5H_{11}$ | $n-C_9H_{19}$ | 0.1 | 0.16 | 15 | 159 |

Table 7

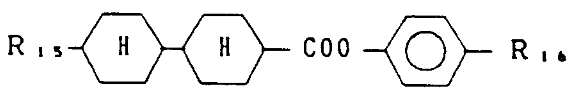

| $R_{15}$ | $R_{16}$ | $\Delta n$ | mp. | cp. |
|---|---|---|---|---|
| $n-C_3H_7$ | $n-C_3H_7$ | 0.11 | 64℃ | 190℃ |
| $n-C_3H_7$ | $n-C_5H_{11}$ | 0.11 | 31 | 180 |
| $n-C_4H_9$ | $n-C_3H_7$ | 0.10 | 18 | 190 |
| $n-C_4H_9$ | $n-C_5H_{11}$ | 0.10 | 7 | 180 |

Table 8

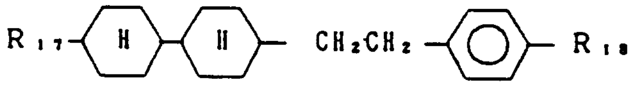

| $R_{17}$ | $R_{18}$ | $\Delta\varepsilon/\varepsilon_{\perp}$ | $\Delta n$ | mp. | cp. |
|---|---|---|---|---|---|
| $n-C_3H_7$ | $CH_3$ | 0.1 | 0.11 | 45 ℃ | 130 ℃ |
| $n-C_3H_7$ | $C_2H_5$ | 0.1 | 0.11 | 13 | 130 |
| $n-C_3H_7$ | $n-C_3H_7$ | 0.1 | 0.12 | −19 | 130 |
| $n-C_3H_7$ | $n-C_5H_{11}$ | 0.1 | 0.10 | − 2 | 140 |
| $n-C_5H_{11}$ | $n-C_5H_{11}$ | 0.1 | 0.10 | 8 | 150 |

Table 9

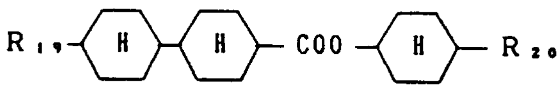

| $R_{19}$ | $R_{20}$ | $\Delta\varepsilon/\varepsilon_{\perp}$ | $\Delta n$ | mp. | cp. |
|---|---|---|---|---|---|
| $n-C_3H_7$ | $n-C_3H_7$ | −0.3 | 0.06 | 58 ℃ | 189 ℃ |
| $n-C_3H_7$ | $n-C_5H_{11}$ | −0.3 | 0.06 | 53 | 188 |
| $n-C_4H_9$ | $n-C_3H_7$ | −0.3 | 0.05 | 59 | 184 |
| $n-C_4H_9$ | $n-C_5H_{11}$ | −0.3 | 0.05 | 38 | 186 |

Table 10

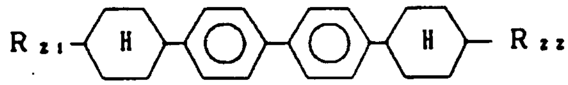

| $R_{21}$ | $R_{22}$ | $\Delta\varepsilon / \varepsilon_{\perp}$ | $\Delta n$ | mp. | cp. |
|---|---|---|---|---|---|
| $n-C_3H_7$ | $n-C_3H_7$ | 0.1 | 0.16 | 109℃ | 324℃ |
| $n-C_5H_{11}$ | $n-C_3H_7$ | 0.1 | 0.19 | 55 | 310 |
| $n-C_5H_{11}$ | $n-C_5H_{11}$ | 0.1 | 0.17 | 75 | 300 |

Table 11

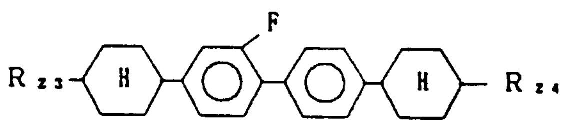

| $R_{23}$ | $R_{24}$ | $\Delta\varepsilon / \varepsilon_{\perp}$ | $\Delta n$ | mp. | cp. |
|---|---|---|---|---|---|
| $n-C_3H_7$ | $n-C_3H_7$ | −0.1 | 0.16 | 131℃ | 296℃ |
| $n-C_5H_{11}$ | $n-C_3H_7$ | −0.04 | 0.16 | 82 | 290 |
| $n-C_5H_{11}$ | $n-C_5H_{11}$ | −0.1 | 0.17 | 80 | 278 |

At least one of the liquid crystal compounds shown in these Tables 3, 4 and 5 and at least one of the compounds shown in Tables 6 to 11 may be used for said third liquid crystal material.

Preferred devices according to the invention are those, wherein the liquid crystal dielectric comprises at least five components.

Among the first to third liquid crystal materials described above, at least the first liquid crystal material and the second liquid crystal material are formulated in the composition. In this case, the first liquid crystal material is formulated so as not to exceed 90 wt% and the second liquid crystal material is formulated in an amount of less than 10 wt% so that the $\Delta\epsilon$ value does not become excessively large. Further in case that the first, second and third liquid crystal materials are formulated, respectively, the first liquid crystal material is formulated in an amount of 10 wt% or more as the minimum formulation ratio that is necessary for exhibiting an effect of lowering the $K_{33}/K_{11}$ value. The second liquid crystal material is formulated in an amount of less than 10 wt% in such a manner that the $\Delta\epsilon$ value does not increase unnecessarily; and the third liquid crystal material is formulated in an amount of less than 90 wt%. Particularly in the liquid crystal composition using a low viscosity liquid crystal as the third liquid crystal material, high speed response can be achieved and such a composition is suited for television display.

It is desired that the first, second and third liquid crystal materials be formulated in amounts of 30 wt% or more, less than 10 wt% and less than 70 wt%, respectively. It is more preferred that the first, second and third liquid crystal materials be formulated in amounts of 30 to 65 wt%, less than 5 wt% and 35 to 70 wt%, respectively.

Particularly preferred are mixtures of this type wherein said second liquid crystal material comprises one or more liquid crystal materials represented by general formula (II):

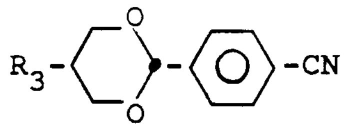

(II)

wherein $R_3$ represents a straight chain alkyl group having 1 to 12 carbon atoms, and said third liquid crystal material comprises liquid crystal compounds represented by general formulae:

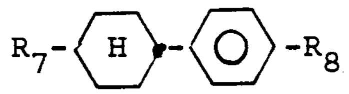

(VI)

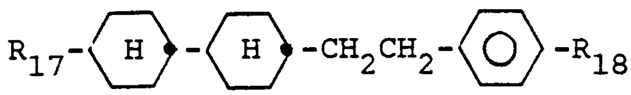

(XI)

wherein $R_7$, $R_{17}$ and $R_{18}$ independently represent a straight chain alkyl group, having 1 to 12 carbon atoms, $R_8$ represents a straight chain alkyl group a straight chain alkoxy group or a straight chain alkanoyloxy group having 1 to 12 carbon atoms, and comprises 5 to 25 wt% of liquid crystal compounds represented by general formula (VI), 20 to 35 wt% of liquid crystal compounds represented by general formula (XI).

Preferably these mixtures additionally comprise 2 to 10 wt% of liquid crystal compounds represented by general formula (IX):

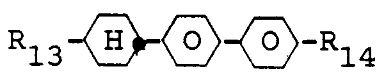

(IX)

where $R_{13}$ and $R_{14}$ independently represent a straight chain alkyl group having 1 to 12 carbon atoms.

Furthermore preferred are mixtures of this type wherein said second liquid crystal material comprises one or more liquid crystal compounds represented by the formula (II) below:

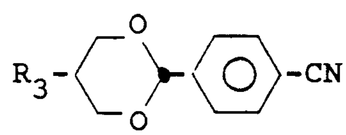

(II)

wherein $R_3$ represents a straight chain alkyl group having 1 to 12 carbon atoms, and said third liquid crystal material comprises 5 to 45 wt% of liquid crystal compounds represented by the formula (VI) and (VII) below, and optionally 5 to 25 wt%, 10 to 25 wt%, and 20 to 25 wt%, respectively, of liquid crystal compounds represented by the formulae (IX), (X), and (XI) below:

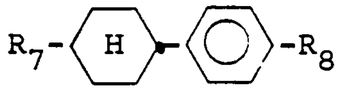

(VI)

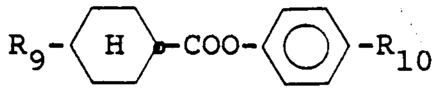

(VII)

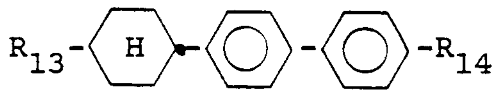

(IX)

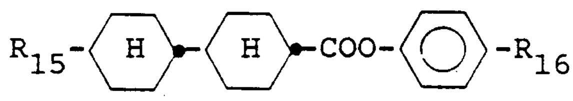

(X)

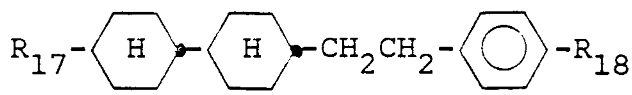

(XI)

wherein $R_7$, $R_9$ and $R_{13}$ to $R_{18}$ independently represent a straight chain alkyl group having 1 to 12 carbon atoms. $R_{10}$ represents a straight chain alkyl group or straight chain alkoxy group having 1 to 12 carbon atoms, and $R_8$ represents a straight chain alkyl group, a straight chain alkoxy group or a straight chain alkanoyloxy group having 1 to 12 carbon atoms.

Preferably these mixtures comprise as said third liquid crystal material 10 to 40 wt% of liquid crystal compounds represented by the formulae (VI) and (VII).

Furthermore preferred are mixtures of this type wherein said second liquid crystal material comprises one or more liquid crystal compounds represented by the formula (II) below:

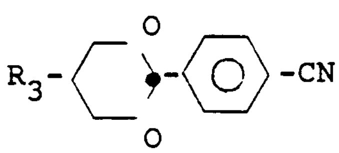

(II)

wherein $R_3$ represents a straight chain alkyl group having 1 to 12 carbon atoms, and said third liquid crystal material comprises 15 to 30 wt%, less than 10 wt%, and 20 to 40 wt%, respectively, of liquid crystal compounds represented by the formulae (VI), (IX) and (X) below, and optionally 5 to 45 wt% of liquid crystal compounds represented by the formula (VII) below:

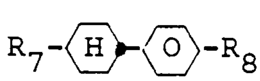

(VI)

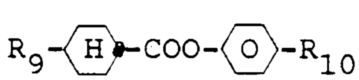

(VII)

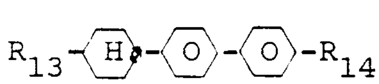

(IX)

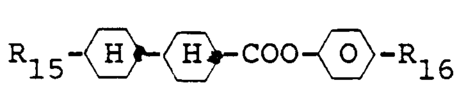

(X)

wherein $R_7$, $R_9$ and $R_{13}$ to $R_{16}$ independently represent a straight chain alkyl group having 1 to 12 carbon atoms, $R_{10}$ represents a straight chain alkyl group or straight chain alkoxy group having 1 to 12 carbon atoms, and $R_8$ represents a straight chain alkyl group, a straight chain alkoxy group or a straight chain alkanoyloxy group having 1 to 12 carbon atoms.

Preferably these mixtures comprise less than 42.6 wt% of liquid crystal compounds represented by the general formula (VII).

Furthermore preferred are mixtures wherein said third liquid crystal material comprises one or more liquid crystal compounds represented by the formulae (XV) and (XVI) below:

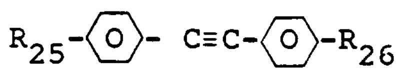

(XV)

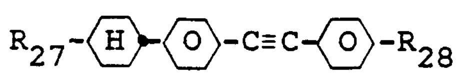

(XVI)

wherein $R_{25}$ and $R_{27}$ each represent R; and $R_{26}$ and $R_{28}$ each represent R or OR; R being in each case independently a straight chain alkyl group having up to 12 carbon atoms wherein one or two non-adjacent $CH_2$ groups may be replaced by -O- or -CH=CH-, two oxygen atoms not being directly attached to each other.

Said compounds of formulae (XV) and (XVI) are preferably present in an amount of 5 to 15 wt%.

It is desired to use the liquid crystal compound respresented by general formula (II) having particularly large dielectric anisotropy $\Delta\epsilon$ and a small $\Delta\epsilon/\epsilon_\perp$ value as the second liquid crystal material. In this case, it is desired that the liquid crystal material represented by general formula (II) be formulated in a proportion of 10 wt% or less, most desirably 5 wt% or less.

In the third liquid crystal material, at least one of low viscosity liquid crystal compounds represented by general formulas (VI), (VII) and (VIII) or, in addition to the low viscosity liquid crystal compounds, at least one of high temperature liquid crystals represented by general formulas (IX), (X), (XI), (XII), (XIII) and (XIV) are formulated. As the low viscosity liquid crystal compounds, at least one of or both of the liquid crystal compound represented by general formula (VI) and the liquid crystal compound represented by general formula (VII) is/are formulated. In case that the liquid crystal compound represented by general formula (VI) is formulated as the low viscosity liquid crystal compound, it is desired to formulate the liquid crystal compound represented by general formula (IX) as the hig temperature liquid crystal and selectively the liquid crystal compound represented by general formula (XI). In this case, it is desired to formulate the liquid crystal compounds represented by general formulas (VI), (IX) and (XI) in proportions of 15 to 45 wt%, 2 to 10 wt% and 20 to 35 wt%, respectively. Particularly in the case of formulating the liquid crystal compounds represented by general formulas (VI) and (XI), the most preferred proportions to be formulated at 17 to 31 wt% and 24 to 33 wt%, respectively. Further in the case of formulating the liquid crystal compounds represented by general formulas (VI), (IX) and (XI), preferred proportions to be formulated are 15 to 30 wt%, 10 wt% or less and 20 to 40 wt%, respectively, most preferably 17 or 27 wt%, 2 to 10 wt% and 23 to 30 wt%, respectively.

In the case that the liquid crystal compounds represented by general formulas (VI) and (VII) are formulated as the low viscosity liquid crystal compounds, it is desired to selectively formulate the liquid crystal compounds represented by general formulas (IX), (X) and (XI) as the high temperature liquid crystal materials. In this case, it is desired to formulate the liquid crystal compounds represented by general formulas (VI) and (VII) in proportions of 10 to 40 wt% and 5 to 45 wt%, respectively and to formulate the liquid crystal compounds represented by general formulas (IX), (X) and (XI) in proportions of 5 to 25 wt%, 10 to 25 wt% and 20 to 25 wt%, respectively. In particular, it is desired that the liquid crystal compound represented by general formula (VII) be formulated in a proportion of 5 to 42.6 wt%.

In the liquid crystal composition of the present invention, the second liquid crystal material can also be formulated with pyrimidine type liquid crystal compounds. In this case, liquid crystal compounds represented by general formula (V) are used as the second liquid crystal material, in which at least one of the liquid crystal compounds, represented by general formula (IX), (X) and (XI) is formulated.

Thus, the liquid crystal composition of the present invention is formulated in such that the $\Delta\epsilon/\epsilon_\perp$ value ranges from 0.12 to 0.5 and the $K_{33}/K_{11}$ value is 0.8 or less.

Preferred dielectrics are those, wherein the formulation ratios of said first liquid crystal material, said second liquid crystal material and said third liquid crystal material are at least 30 wt%, less than 10 wt%

and less than 70 wt%, respectively.

Particularly preferred dielectrics are those, wherein the formulation ratios of said first liquid crystal material, said second liquid crystal material and said third liquid crystal material are 30 to 65 wt%, less than 5 wt% and 35 to 70 wt%, respectively.

Such dielectrics can additionally contain dyes and/or doping substances in the usual quantities, unless the liquid crystal parameters are thus taken out of the ranges according to the invention.

Mixing ratios of the liquid crystalline components to achieve the parameters discussed above can be routinely determined by the usual preliminary orientation experiments taking into account the usual considerations. Some of the many publications, whose disclosures are incorporated by reference herein, disclosing details of suitable materials include German Offenlegungsschrift 2,257,588; 2,306,738; 2,017,727; 2,321,632; European Published Application 0,126,883; USP 3,997,536; 4,062,798; 4,462,923; 4,389,329; 4,364,838; 4,066,570; 4,452,718; 4,419,262; 4,510,069; Japanese Published Applications 144,770/84; 144,771/84; 144,772/84 43,961/83; D. Demus et al., Flüssige Kristalle in Tabellen, VEB Deutscher Verlag für Grundstoffindustrie, Leipzig 1974 and D. Demus et al., Flüssige Kristalle in Tabellen II, VEB Deutscher Verlag für Grundstoffdindustrie, Leipzig 1984.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever. In the tables 1-4 above and the following examples, all temperatures are set forth uncorrected in degrees Celsius; unless otherwise indicated, all parts and percentages are by weight.

These liquid crystal compositions are sealed between base plates facing to each other in which electrodes are formed, so as to twist-orient the liquid crystal molecules to almost 90° and, a voltage for time sharing drive is applied to a large number of facing electrodes. In this case, the layer thickness of liquid crystal in liquid crystal elements is set to 7.0 µm or less.

With respect to the liquid crystal composition of the present invention, concrete examples are explained below. Respective proportions of the liquid crystal compositions of the present invention are shown in Tables 12 through 14, wherein formulation proportions are by wt%.

Formulation proportions of Examples 1 through 48 using the dioxane liquid crystal compounds represented by general formula (II) as the second liquid crystal material are shown in Tables 12 and 13. In Table 13, Example 1 indicates a composition in which the first liquid crystal material is formulated in a proportion of 30 wt%; Example 2 indicates a liquid crystal composition in which the first liquid crystal material is formulated in the smallest proportion; and Examples 3 and 4 indicate liquid crystal compositions in which the second liquid crystal material is formulated in the largest proportion. In Example 5, only the liquid crystal compound represented by general formula (VII) is formulated as the low viscosity liquid crystal compound. In Examples 6 through 25, only the liquid crystal compound represented by general formula (VI) is used as the low viscosity liquid crystal compound; in this case, the liquid crystal compound represented by general formula (IX), (X), (XI) or (XIII) is selectively formulated as the high temperature liquid crystal compound.

Table 13 shows liquid crystal compositions using the liquid crystal compounds represented by general formulas (VI) and (VII) as the third liquid crystal material. In Example 26, the low viscosity liquid crystal compound represented by general formula (VIII) is additionally formulated to provide a liquid crystal composition having an extremely low viscosity. Examples 27 through 48 shown in Table 13 indicate liquid crystal compositions in which the liquid crystal compounds represented by general formulas (IX), (X), (XI), (XII) and (XIII) are selectively formulated.

Examples of the liquid crystal compositions in accordance with the present invention using the liquid crystal compound represented by general formula (IV) or (V) as the second liquid crystal material are shown in Table 14. In Examples 49 through 53, the liquid crystal compound represented by general formula (VI) is formulated as the third liquid crystal material and the liquid crystal compounds represented by general formulas (VII) to (IX) are selectively formulated.

Of major liquid crystal compositions in Examples 1 through 53 described above, physical properties are shown in Table 15. As is clear from Table 15, in the liquid crystal compositions of the present invention, temperatures at S-N point (smectic phase - nematic phase transition point) are 0° C or lower and temperatures at N-I point (nematic phase - isotropic phase transition point) are 55 °C or higher; anisotropy in refractive index $\Delta n$ is 0.14 or less; and viscosity is 38 cp. or less. The value of dielectric anisotropy $\Delta\epsilon$ is as relatively small as +12 or less but the value of a ratio of dielectric anisotropy $\Delta\epsilon$ to a dielectric constant in the direction perpendicular to the molecular axis of liquid crystal, $\Delta\epsilon/\epsilon_{\perp}$, is as extremely small as 0.5 or less.

Further in the examples described above, measurement values of elasticity constant ratio $K_{33}/K_{11}$ are shown in Table 16, with respect to major liquid crystal compositions. As shown in Table 16, in the liquid crystal compositions of the present invention, liquid crystal compounds having a small elasticity constant ratio $K_{33}/K_{11}$ value and liquid crystal compounds having a particularly large splay elasticity constant $K_{11}$ are formulated so that the elasticity constant ratio $K_{33}/K_{11}$ value of the liquid crystal compositions is as extremely small as 0.8 or less.

The aforesaid equation (1) which agrees with found values when applied to conventional liquid crystal display elements is inapplicable to the liquid crystal display elements using small values in elasticity constant ratio $K_{33}/K_{11}$ and in $\Delta\epsilon/\epsilon\perp$. Namely, in the liquid crystal display element using the liquid crystal composition of the present invention, the $\gamma$ property becomes the best when the product of anisotropy in refractive index of the liquid crystal composition, $\Delta n$, and layer thickness of liquid crystal, d, i.e., the $\Delta n.d$ value is smaller than 1.1 ($\mu$m) even in the case of wavelength of a light being 550 nm. Accordingly, $\Delta n.d$ becomes small so that visual angle properties are improved; further the layer thickness d of liquid crystal can be reduced so that a decrease in response speed is relatively small.

Here, as the response speed of liquid crystal element has been studied by M. Schadt et al, rise time $t_{ON}$ and trailing time $t_{OFF}$ are expressed by:

$t_{ON} = \eta/\epsilon_o\Delta\epsilon E^2 - Kq^2$ (2)
$t_{OFF} = \eta/Kq^2$ (3)

wherein $q = \pi/d$, $\eta$: viscosity, E: electric field

$$K = K_{11} + \frac{K_{33} - 2K_{22}}{4}$$

Further the equation (2) for $t_{ON}$ is modified as:

$$\eta = \gamma_1$$

$$V_c = \pi\sqrt{\frac{K}{\varepsilon_o\Delta\varepsilon}} \quad \ldots\ldots (4)$$

to become:

$$t_{ON} = \frac{\gamma_1 d^2}{\pi^2 K(V^2/V_c^2 - 1)} \quad \ldots\ldots (5)$$

As is clear from the equations (3) and (5) described above, the liquid crystal composition of the present invention has small $t_{ON}$ and $t_{OFF}$ and response speed is fast because the $K_{33}/K_{11}$ value is rendered small by increasing the $K_{11}$ value. Further by increasing $\epsilon\perp$, teh $\Delta\epsilon/\epsilon\perp$ value reduced so that there is no necessity to reduce the $\Delta\epsilon$ value excessively and, $\Delta\epsilon$ value is relatively large though the $\Delta\epsilon/\epsilon\perp$ value is small. Therefore, increase of $V_c$ can be relatively reduced, as shown by the equation (4). Accordingly, rise in operation voltage is small.

As has been described hereinabove, the liquid crystal display element using the liquid crystal composition of the present invention provides the best $\gamma$ property when the $\Delta n.d$ value is in a small range, this giving good visual angle properties and rapid response speed and, high contrast, whereby operation

margin can be broadened.

Therefore, the liquid crystal composition of the present invention is most suited for liquid crystal display elements for high time share driving.

Hereafter electro-optical properties will be explained when a liquid crystal display element for time share driving using the liquid crystal composition of the present invention is driven by a time share driving signal of 1/64 duty. Table 17 indicates constitutional factors of the liquid crystal display element and electro-optical properties thereof. The numbering of liquid crystal element corresponds to the number of composition in the liquid crystal composition used.

Herein, anisotropy in refractive index, Δn, indicates a value measured at $\gamma$ = 589 nm; and contrast is the maximum value of a value ($Y_{ON}/Y_{OFF}$) obtained by dividing a value of transmittance $Y_{ON}$ when the signal is on in each direction of visual angles by a value of transmittance when it is off, when driven by a driving signal of 1/64 duty. Threshold voltage $V_{th}$ is a voltage applied when the contrast shows the maximum.

Further the response speed is defined to be value of (Tr + Tp)/2, when rise time is Tr until luminance reaches from 10 % to 90 % and trailing time is Tp until reaches from 90 % to 10 %.

As is clear from this Table 17, the Δn.d value is in a range sufficiently smaller than 1.1, contrast is high and the $\gamma$ property is also good. As such, in order to obtain high contrast and good $\gamma$ property with the Δn.d value being in the range smaller than 1.1, the elasticity constant ratio $K_{33}/K_{11}$ value is 0.8 or less and the $\Delta\epsilon/\epsilon\perp$ value is 0.5 or less.

With respect to major liquid crystal display elements out of these elements, visual angle properties thereof are shown in Table 18. Herein, the visual angle property is defined by a value of $V_{th}$ ($\theta$ = 10°) at a temperature of 25° when a threshold voltage is made $V_{th}$ ($\theta$ = 10°) when observed from direction P inclined from the Z-axis perpendicular to the base plate surface of the liquid crystal display element toward the visual angle direction by 10°; a threshold voltage is made $V_{th}$ ($\theta$ = 30°) when observed from direction Q inclined from the Z-axis toward the visual angle direction by 30° and a threshold voltage is made $V_{th}$ ($\theta$ = -10°) when observed from direction Q inclined from the Z-axis toward the reversed direction to the visual angle direction by 10°. This visual angle property is good, namely, indicates that visual angle is widened, as the value approximates to 1.

As shown in Table 18, the liquid crystal display element using the liquid crystal composition of the present invention is excellent also in visual angle properties. That is, the liquid crystal display elements using the liquid crystal compositions in the aforesaid examples show excellent properties in contrast, operational margin and visual angle properties and can respond at a sufficiently high speed, using driving signals of a voltage obtained by ordinary driving circuits using integral circuits.

Liquid crystal display elements for displaying animations such as television images, etc. require high speed response of 30 msec or more; in this case, when the Δn.d value of the liquid crystal display elements is large, the visual angle properties are worsened and its response speed becomes slow and further when the Δn.d value is small, contrast decreases so that the Δn.d value is desirably in a range of 0.55 to 0.70. Further when the anisotropy in refractive index Δn of the liquid crystal composition is large, the visual angle properties are worsened so that the Δn value is desirably 0.14 or less. Furthermore, when the layer thickness d value of liquid crystal becomes large, a response speed becomes slow so that the layer thickness d value of liquid crystal is desirably 0.7 µm or less.

The liquid crystal compositions for obtaining such liquid crystal display elements for displaying animations have their elasticity constant ratio $K_{33}/K_{11}$ value of 0.8 or less and their $\Delta\epsilon/\epsilon\perp$ value of 0.5 or less. The smaller these values, the more are the electro-optical properties of the liquid crystal display elements improved.

As described above, the liquid crystal composition of the present invention is suited for highly time share-driven liquid crystal display elements and, in particular, most suited for use in liquid crystal display elements requiring high contrast, high speed response and wide visual angle as in television receivers.

In the liquid crystal compositions of the present invention, $K_{11}$ can be increased thereby to decrease $K_{33}/K_{11}$,by formulating pyrimidine type liquid crystal compounds therein as main components. Further liquid crystal compounds having a negative or almost null dielectric anisotropy are mainly formulated and a small amount of liquid crystal compounds having a positive dielectric anisotropy is formulated therein so that $\epsilon\perp$ can be increased thereby to reduce the $\Delta\epsilon/\epsilon\perp$ value. Accordingly, the liquid crystal compositions enable to operation of time sharing-driven liquid crystal display devices at high contrast and high speed and also enable to broadening visual angle.

Table 12

| Liquid Crystal Material | Liquid Crystal Compound | | | Example | | | | | | | | | | | | | | | | | | | |
|---|---|---|---|---|---|---|---|---|---|---|---|---|---|---|---|---|---|---|---|---|---|---|---|
| | General formula | R | R' | 1 | 2 | 3 | 4 | 5 | 6 | 7 | 8 | 9 | 10 | 11 | 12 | 17 | 18 | 19 | 20 | 21 | 23 | 24 | 25 |
| First Liquid Crystal Material | 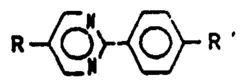 | $C_6H_{13}$ | $OCH_3$ | | | | | | | | | | | | | | | | | | | | |
| | | $C_6H_{13}$ | $OC_5H_{11}$ | 4.9 | 5 | 5 | 5 | | 5 | 5 | 5 | 5 | 6 | 5 | 5 | 5 | 5 | 5 | 5 | 5 | | 6 | |
| | | $C_6H_{13}$ | $OC_6H_{13}$ | 4.9 | 5 | 5 | | | 5 | 5 | 5 | | 5 | | | | | | 5 | 5 | | | |
| | | $C_6H_{13}$ | $OC_7H_{15}$ | 4.9 | | 5 | 5 | | 5 | 5 | 5 | | 6 | 5 | 5 | 5 | 5 | 5 | 5 | 5 | 5 | 5 | 5 |
| | | $C_6H_{13}$ | $OC_9H_{19}$ | 4.9 | | 5 | 5 | | 5 | 5 | 5 | 5 | 6 | 5 | 5 | 5 | 5 | 5 | 5 | 5 | 5 | 5 | 5 |
| | | $C_7H_{15}$ | $OCH_3$ | | | | | | 5 | 5 | | 5 | | | | | | | | | | | 5 |
| | | $C_7H_{15}$ | $OC_7H_{15}$ | 4.9 | | 5 | 5 | | 5 | 5 | 5 | 5 | 6 | 5 | 5 | 5 | 5 | 5 | 5 | 5 | 5 | 5 | 5 |
| | | $C_7H_{15}$ | $OC_9H_{19}$ | 4.9 | | 5 | 5 | | 5 | 5 | 5 | 5 | 6 | 5 | 5 | 5 | 5 | 5 | 5 | 5 | 5 | 5 | 5 |
| | | $C_9H_{19}$ | $OCH_3$ | | | | | | 5 | 5 | | | | | | | | | | | | | |
| | | $C_9H_{19}$ | $OC_6H_{13}$ | | | | | | 5 | 5 | | | 4 | | | | | | 4 | | | | |
| | | $C_9H_{19}$ | $OC_9H_{19}$ | | | | | | | | | | 4 | | | | | | | | | | |
| | | $C_3H_7$ | $C_2H_5$ | | | | 6 | 8 | | | | 7 | | 8 | 8 | 7 | 7 | 8 | 5 | | 7 | 7 | 5 |
| | | $C_3H_7$ | $C_3H_7$ | | | | 7 | 8 | 5 | 5 | | 7 | | 8 | 7 | 7 | 7 | 7 | 5 | | 6 | 6 | 5 |
| | | $C_5H_{11}$ | $C_3H_7$ | | | | | 10 | | | | | | | | | | | | | | | |
| | | $C_7H_{15}$ | $C_2H_5$ | | | | | 12 | 5 | 5 | | | | 7 | | | 6 | | | | | | 5 |
| Second Liquid Crystal Material | 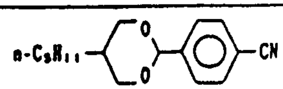 | | | 3.5 | 3.5 | 8 | 9 | 2 | 2 | 2 | 2 | 2 | 2 | 2 | 2 | 2 | 2 | 2 | 2 | 2 | 3.5 | 2 | 2 |

Table 12 (continued)

| | General formula | R | R' | 1 | 2 | 3 | 4 | 5 | 6 | 7 | 8 | 9 | 10 | 11 | 12 | 17 | 18 | 19 | 20 | 21 | 23 | 24 | 25 |
|---|---|---|---|---|---|---|---|---|---|---|---|---|---|---|---|---|---|---|---|---|---|---|---|
| Third Liquid Crystal Material | 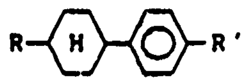 | $C_5H_{11}$ | $C_3H_7$ | 12.8 | 13 | 10 | 9 | | 5 | 8 | 14 | 11 | 12 | 10 | 11 | 11 | 11 | 12 | 11 | 14 | 12 | 12 | 15 |
| | | $C_3H_7$ | $OCH_3$ | | 10.5 | | | | | | 10 | | 9 | | | | | | | 12 | | | |
| | | $C_3H_7$ | $OC_2H_5$ | | | | 8 | | | | 15 | 10 | 10 | 7 | 8 | 9 | 10 | 8 | 13 | 18 | 13 | 10 | 12 |
| | | $C_3H_7$ | $OC_4H_9$ | | 8 | | 5 | | | | 15 | 7 | | | 7 | 7 | | 5 | | | 10.5 | 10 | |
| | | $C_3H_7$ | $OC_5H_{11}$ | | 8 | | | | | | | | | | | | | | | | | | |
| | | $C_4H_9$ | $OC_4H_9$ | | 7 | | | | | | | | | | | | | | | | | | |
| | | $C_5H_{11}$ | $OC_5H_{11}$ | | 5 | | | | | | | | | | | | | | | | | | |
| | | $C_5H_{11}$ | $OC_6H_{13}$ | | 5 | | | | | | | | | | | | | | | | | | |
| | 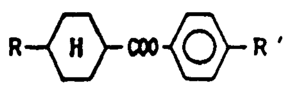 | $C_5H_{11}$ | $C_5H_{11}$ | 10.9 | | | | | | | | | | | | | | | | | | | |
| | | $C_3H_7$ | $OCH_3$ | | | | | 9 | | | | | | | | | | | | | | | |
| | | $C_3H_7$ | $OC_2H_5$ | 10.9 | | | | | | | | | | | | | | | | | | | |
| | | $C_3H_7$ | $OC_4H_9$ | 10.9 | | | | | | | | | | | | | | | | | | | |
| | | $C_4H_9$ | $OCH_3$ | 9.9 | | | | 10 | | | | | | | | | | | | | | | |
| | | $C_4H_9$ | $OC_2H_5$ | | | | | | | | | | | | | | | | | | | | |
| | | $C_5H_{11}$ | $OCH_3$ | | | | | 9 | | | | | | | | | | | | | | | |
| | 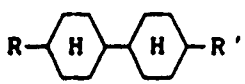 | $C_3H_7$ | $OCH_3$ | | | 15 | | | 9 | 8 | | | | | | | | | | | | | |
| | | $C_3H_7$ | $OC_2H_5$ | | | 10 | | | | | | | | | | | | | | | | | |
| | | $C_4H_9$ | $OC_3H_7$ | | | 15 | | | 18 | 8 | | | | | | | | | | | | | |
| | | $C_5H_{11}$ | $OC_2H_5$ | | | | | | | | | | | | | | | | | | | | |

Table 12 (continued)

| | General formula | R | R' | 1 | 2 | 3 | 4 | 5 | 6 | 7 | 8 | 9 | 10 | 11 | 12 | 17 | 18 | 19 | 20 | 21 | 23 | 24 | 25 |
|---|---|---|---|---|---|---|---|---|---|---|---|---|---|---|---|---|---|---|---|---|---|---|---|
| Third Liquid Crystal Material | 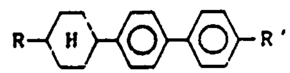 | $C_3H_7$ | $C_2H_5$ | | 11 | | | | | | | | | | | | | | | | | 10 | |
| | | $C_5H_{11}$ | $C_2H_5$ | | | | | | | | | | | | | | | 5 | 4 | 10 | 10 | 10 | |
| | | $C_5H_{11}$ | $C_9H_{19}$ | | | | 4 | | | | | | | | | 5 | 5 | 5 | | | | | 7 |
| | 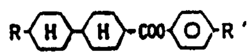 | $C_3H_7$ | $C_3H_7$ | | 4 | | | | | 5 | | | | | | | | | | 3 | 5 | 4 | 6 |
| | | $C_3H_7$ | $C_5H_{11}$ | | 5 | | | | | 5 | | 11 | | | | | | | | 3 | 5 | 3 | 6 |
| | | $C_4H_9$ | $C_3H_7$ | | 5 | | | | | 5 | | 10 | | | | | | | | 4 | 4 | | 6 |
| | | $C_4H_9$ | $C_5H_{11}$ | | 5 | | | | | 4 | | 10 | | | | | | | | 4 | 4 | | 6 |
| | 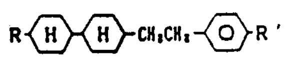 | $C_3H_7$ | $CH_3$ | | | | 9 | 11 | | | | | 12 | 11 | 8 | 9 | 9 | 8 | 8 | | | | |
| | | $C_3H_7$ | $C_2H_5$ | | | | | | | | | | | | 8 | | | | | | | | |
| | | $C_3H_7$ | $C_3H_7$ | | | | 9 | | | | | | | 11 | 8 | 9 | 9 | 8 | 9 | | | | |
| | | $C_3H_7$ | $C_5H_{11}$ | | | | 9 | 11 | | | | | 12 | 11 | 8 | 9 | 9 | 7 | 9 | | | | |
| | | $C_5H_{11}$ | $C_5H_{11}$ | | | | | 10 | | | | | | | | | | | | | | | |
| | 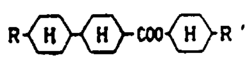 | $C_3H_7$ | $C_3H_7$ | 3.9 | | | | | | | | | | | | | | | | | | | |
| | | $C_3H_7$ | $C_5H_{11}$ | | | | | | | | | | | | | | | | | | | | |
| | | $C_4H_9$ | $C_3H_7$ | 3.9 | | | | | | | | | | | | | | | | | | | |
| | | $C_4H_9$ | $C_5H_{11}$ | 3.9 | | | | | | | | | | | | | | | | | | | |
| | 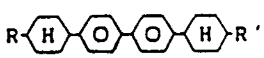 | $C_3H_7$ | $C_3H_7$ | | | 4 | | | | | 4 | | | | | | | | | | | | |
| | | $C_5H_{11}$ | $C_3H_7$ | | | 4 | | | 6 | | 5 | | | | | | | | | | | | |
| | | $C_5H_{11}$ | $C_5H_{11}$ | | | 4 | | | 5 | | 5 | | | | | | | | | | | | |

Table 12 (contiuned)

| | General formula | R | R' | 1 | 2 | 3 | 4 | 5 | 6 | 7 | 8 | 9 | 10 | 11 | 12 | 17 | 18 | 19 | 20 | 21 | 23 | 24 | 25 |
|---|---|---|---|---|---|---|---|---|---|---|---|---|---|---|---|---|---|---|---|---|---|---|---|
| Third Liquid Crystal Material | 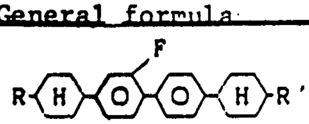 | $C_3H_7$ | $C_3H_7$ | | | | | | | | | | | | | | | | | | | | |
| | | $C_5H_{11}$ | $C_3H_7$ | | | | | | | | | | | | | | | | | | | | |
| | | $C_5H_{11}$ | $C_5H_{11}$ | | | | | | | | | | | | | | | | | | | | |

Table 13

| Liquid Crystal Material | Liquid Crystal Compound General formula | R | R' | 27 | 28 | 29 | 30 | 31 | 32 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|---|---|---|---|---|---|---|---|
| First Liquid Crystal Material | 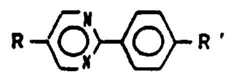 | $C_6H_{13}$ | $OCH_3$ | | | | | | | | | | | | | | | | | | | | | | |
| | | $C_6H_{13}$ | $OC_5H_{11}$ | 5 | 5 | 5 | 5 | 5 | | 5 | 5 | 5 | | | | | | 5 | | | | | | | |
| | | $C_6H_{13}$ | $OC_6H_{13}$ | 5 | 5 | 5 | 5 | 5 | | 5 | 5 | 5 | | | | | | 5 | | | | | | | |
| | | $C_6H_{13}$ | $OC_7H_{15}$ | 5 | 5 | 5 | 5 | 5 | 5 | 5 | 5 | 5 | 5 | 5 | 5 | | 5 | 5 | 5 | 5 | 5 | 5 | 5 | 5 | |
| | | $C_6H_{13}$ | $OC_9H_{19}$ | 5 | 5 | 5 | 5 | 5 | 5 | 5 | 5 | | 5 | 5 | 5 | 4 | 5 | 5 | 5 | 5 | 5 | 5 | 5 | 5 | |
| | | $C_7H_{15}$ | $OCH_3$ | | | | | | | | | | | | | | | | | | | | | | |
| | | $C_7H_{15}$ | $OC_7H_{15}$ | 5 | 5 | 5 | 5 | 5 | 5 | 5 | 5 | 5 | 5 | 5 | 5 | 4 | 5 | 5 | 5 | 5 | 5 | 5 | 5 | 5 | |
| | | $C_7H_{15}$ | $OC_9H_{19}$ | 5 | 5 | 5 | 5 | 5 | 5 | 5 | 5 | | 5 | 5 | 5 | 4 | 5 | 5 | 5 | 5 | 5 | 5 | 5 | 5 | |
| | | $C_3H_7$ | $C_2H_5$ | | | | | | 5 | | | 5 | 6 | 5 | 5 | 6 | 7 | | 7 | | | | | 6 | 8 |
| | | $C_3H_7$ | $C_3H_7$ | | | 6 | | | 5 | | | 5 | 6 | 5 | 5 | 6 | 6 | | 6 | | 6 | | | 5 | 8 |
| | | $C_5H_{11}$ | $C_3H_7$ | | | | | | | | | | | | | 6 | | | | 8 | 6 | 8 | 8 | | 10 |
| | | $C_7H_{15}$ | $C_2H_5$ | | | | | | | | | | | | | | | | | 8 | 6 | 8 | 8 | 5 | 12 |
| Second Liquid Crystal Material | 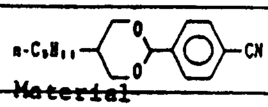 | | | 2 | 3 | 2 | 3.5 | 2.5 | 2.5 | 3.5 | 3.5 | 2 | 3 | 2 | 1 | 1.5 | 2 | 2 | 2 | 2 | 2 | 2 | 2 | 2 | 2 |
| | 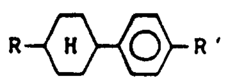 | $C_5H_{11}$ | $C_3H_7$ | 14 | 14 | 12 | 13.5 | 13 | 13 | 12.5 | 13.5 | 13 | 12 | 13 | 13 | 11 | 13 | 14 | 12 | 13 | | 13 | 12 | 15 | 10 |
| | | $C_3H_7$ | $OCH_3$ | 10 | | | | | | | | | | | | | | 10 | | | 12 | | 10 | | |
| | | $C_3H_7$ | $OC_2H_5$ | 15 | 10 | 11 | | | | 10 | | | | | | | | 12 | 13 | | 11 | 12 | | 12 | |
| | | $C_3H_7$ | $OC_4H_9$ | | | | | | | 10 | | | | | | | | | | 13 | | | | | |
| | | $C_3H_7$ | $OC_5H_{11}$ | | | | | | | 6 | | | | | | | | | | | | | | | |

Table 13 (contiuned)

| | General formula | R | R' | 27 | 28 | 29 | 30 | 31 | 32 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|---|---|---|---|---|---|---|---|
| Third Liquid Crystal Material | 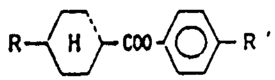 | $C_5H_{11}$ | $C_5H_{11}$ | 15 | 11 | 10 | 11 | 11 | 11 | 10 | 11 | 12 | 13 | 12 | 13 | 12.5 | .4 | 10 | 13 | 13 | | 13 | 11 | | 10 |
| | | $C_3H_7$ | $OCH_3$ | | | | | | | | | | | | | | 7 | | | | 10 | | | | |
| | | $C_3H_7$ | $OC_2H_5$ | | | | | 10 | | | | 10 | | | | | | | | | | | | | |
| | | $C_3H_7$ | $OC_4H_9$ | | | | 10 | 10 | 11 | | 10 | | | 10 | 10 | 10 | | | | | | | | 6 | 9 |
| | | $C_4H_9$ | $OCH_3$ | | 10 | 5 | 9 | 8.5 | 10.5 | | 10 | 10 | 13 | 10 | 10 | 10 | 6 | | | | 5 | | | | |
| | | $C_4H_9$ | $OC_2H_5$ | | | | 8 | | | | 10 | | | | | | | | | | | | | | |
| | 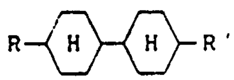 | $C_3H_7$ | $OC_3H_7$ | | | | | | | | | | | | | | | | | | | | | | |
| | 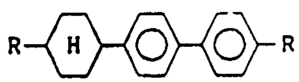 | $C_3H_7$ | $C_2H_5$ | | | | | | 11 | | | | | | | 5 | | | | | 9 | | 7 | | |
| | | $C_5H_{11}$ | $C_2H_5$ | | | | 10 | 10 | 11 | | | 11 | 5 | 11 | 11 | 8 | 10 | 10 | 10 | 7 | | 12 | 7 | | 10 |
| | | $C_5H_{11}$ | $C_9H_{19}$ | | | | 5 | 5 | | | | | | | | | | | | | | | | 7 | |
| | 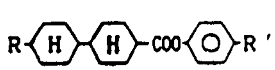 | $C_3H_7$ | $C_3H_7$ | | | | | | | 4 | | | | | | | 3 | | 5 | 4 | 4 | | 4 | 5 | 5 |
| | | $C_3H_7$ | $C_5H_{11}$ | | | | | | | 4 | 4 | 4 | | 4 | 4 | 4 | 4 | 4 | 4 | 4 | 3 | 4 | 4 | 6 | 4 |
| | | $C_4H_9$ | $C_3H_7$ | | | | | | | 5 | 4 | 4 | | 4 | 4 | 4 | 4 | 4 | 4 | 4 | 3 | 4 | 3 | 5 | 4 |
| | | $C_4H_9$ | $C_5H_{11}$ | | | | | | | 5 | 4 | 4 | | 4 | 4 | 4 | 4 | 4 | 4 | 4 | 3 | 4 | 4 | 6 | 4 |
| | 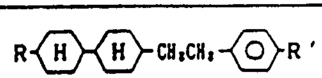 | $C_3H_7$ | $C_3H_7$ | | 11 | 12 | | | | | | | 11 | | | | | | | | | | | | |
| | | $C_3H_7$ | $C_5H_{11}$ | | 11 | 12 | | | | | | | 11 | | | | | | | | | | | | |
| | 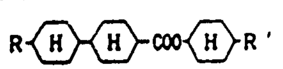 | $C_3H_7$ | $C_5H_{11}$ | | | | | | | | | | | | | | | | | | | | | | 4 |

Table 13 (contiuned)

| | General formula | R | R' | 27 | 28 | 29 | 30 | 31 | 32 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|---|---|---|---|---|---|---|---|
| | 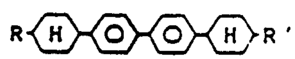 | $C_3H_7$ | $C_3H_7$ | 4 | | | | | | | | | | | | | | | | | | | | | |
| | | $C_5H_{11}$ | $C_3H_7$ | 5 | | | | | | | | | | | | | | | | | | | | | |
| | | $C_5H_{11}$ | $C_5H_{11}$ | 5 | | | | | | | | | | | | | | | | | | | | | |

Table 14

| Liquid Crystal Material | Liquid Crystal Compound: General formula | R | R' | Example 49 | 50 | 51 | 52 | 53 |
|---|---|---|---|---|---|---|---|---|
| First Liquid Crystal Material | 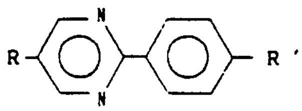 | $C_6H_{13}$ | $OCH_3$ | 5 | 5 | | | |
| | | $C_6H_{13}$ | $OC_5H_{11}$ | 5 | 5 | | | 5 |
| | | $C_6H_{13}$ | $OC_6H_{13}$ | 5 | 5 | | | |
| | | $C_6H_{13}$ | $OC_7H_{15}$ | 5 | 5 | 5 | 5 | 5 |
| | | $C_6H_{13}$ | $OC_9H_{19}$ | 5 | 5 | 5 | 5 | 5 |
| | | $C_7H_{15}$ | $OCH_3$ | 5 | 5 | | | |
| | | $C_7H_{15}$ | $OC_7H_{15}$ | 5 | 5 | 5 | 5 | 5 |
| | | $C_7H_{15}$ | $OC_9H_{19}$ | 5 | 5 | 5 | 5 | 5 |
| | | $C_9H_{19}$ | $OCH_3$ | 5 | 5 | | | |
| | | $C_9H_{19}$ | $OC_6H_{13}$ | 5 | 5 | | | |
| | | $C_9H_{19}$ | $OC_9H_{19}$ | 5 | 5 | | | |
| | | $C_3H_7$ | $C_2H_5$ | | | 6 | 6 | 7 |
| | | $C_3H_7$ | $C_3H_7$ | | | 5 | 5 | 7 |
| | | $C_7H_{15}$ | $C_2H_5$ | 5 | 5 | 5 | 5 | |

Table 14 (continued)

| Liquid Crystal Material | General formula | R | R' | 49 | 50 | 51 | 52 | 53 |
|---|---|---|---|---|---|---|---|---|
| Second Liquid Crystal Material | 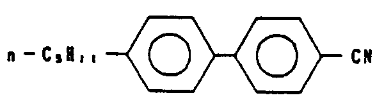 | | | | | | 2 | |
| | 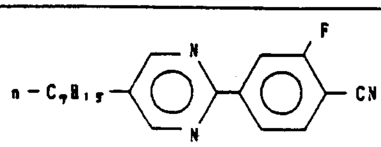 | | | 1 | 1 | 2 | | |
| | 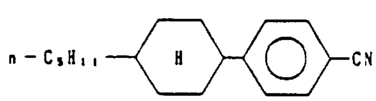 | | | | | | | 2 |
| Third Liquid Crystal Material | 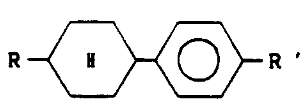 | $C_5H_{11}$ | $C_3H_7$ | 10 | | 15 | 14 | 11 |
| | | $C_3H_7$ | $OCH_3$ | 12 | 7 | | | |
| | | $C_3H_7$ | $OC_2H_5$ | | | 12 | 12 | 9 |
| | | $C_3H_7$ | $OC_4H_9$ | | | | | 7 |
| | 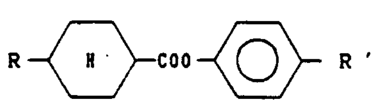 | $C_3H_7$ | $OC_4H_9$ | | | 6 | 6 | |
| | 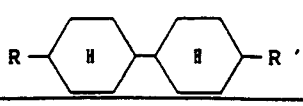 | $C_3H_7$ | $OCH_3$ | | 12 | | | |

Talbe 14 (continued)

| | General formula | R | R ' | 49 | 50 | 51 | 52 | 53 |
|---|---|---|---|---|---|---|---|---|
| Third Liquid Crystal material | 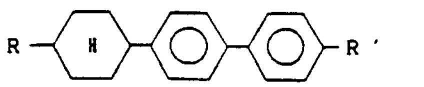 | $C_3H_7$ | $C_2H_5$ | | | | 9 | |
| | | $C_5H_{11}$ | $C_2H_5$ | | | | 12 | 5 |
| | | $C_5H_{11}$ | $C_9H_{19}$ | | | 7 | 9 | |
| | 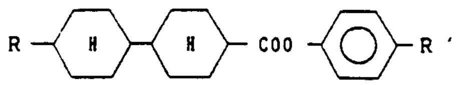 | $C_3H_7$ | $C_3H_7$ | 4 | | 5 | | |
| | | $C_3H_7$ | $C_5H_{11}$ | 4 | | 6 | | |
| | | $C_4H_9$ | $C_3H_7$ | | | 5 | | |
| | | $C_4H_9$ | $C_5H_{11}$ | | | 6 | | |
| | 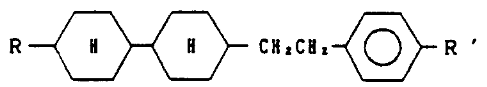 | $C_3H_7$ | $CH_3$ | | 8 | | | 9 |
| | | $C_3H_7$ | $C_3H_7$ | | | | | 9 |
| | | $C_3H_7$ | $C_5H_{11}$ | | | | | 9 |
| | 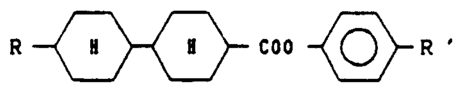 | $C_3H_7$ | $C_3H_7$ | | 4 | | | |
| | | $C_3H_7$ | $C_5H_{11}$ | | 4 | | | |
| | | $C_4H_9$ | $C_3H_7$ | | 4 | | | |
| | 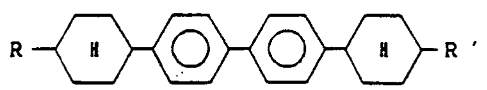 | $C_5H_{11}$ | $C_5H_{11}$ | 4 | | | | |
| | 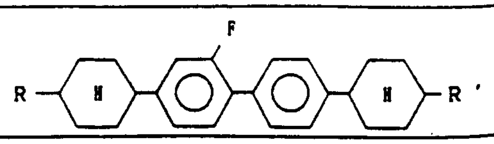 | $C_5H_{11}$ | $C_5H_{11}$ | 5 | | | | |

Table 15

| Example No. | | 1 | 2 | 3 | 4 | 5 | 6 | 7 | 8 | 9 | 10 | 11 | 12 |
|---|---|---|---|---|---|---|---|---|---|---|---|---|---|
| Physical property of liquid crystal composition | S-N (℃) | <-40° | <-20° | <-30° | <-40° | <-40° | <-40° | <-20° | <-40° | <-40° | <-30° | < 0° | <-40° |
| | C. P (℃) | 57° | 62° | 63° | 64° | 57° | 61° | 59° | 58° | 61° | 61° | 61° | 61° |
| | Δn | 0.100 | 0.096 | 0.099 | 0.121 | 0.116 | 0.127 | 0.120 | 0.114 | 0.117 | 0.117 | 0.126 | 0.118 |
| | η (cP) | 29 | 24 | 23 | 31 | 17 | 32 | 38 | 22 | 25 | 28 | 29 | 24 |
| | Δε | 0.71 | — | — | — | 1.30 | 1.25 | 1.102 | — | 1.18 | 0.99 | 1.43 | 1.12 |
| | Δε/ε⊥ | 0.19 | — | — | — | 0.40 | 0.40 | 0.34 | — | 0.42 | 0.33 | 0.51 | 0.396 |

Table 15 (continued)

| Example No. | | 17 | 18 | 19 | 20 | 21 | 22 | 23 | 24 | 25 | 27 | 28 | 29 | 30 | 31 | 32 |
|---|---|---|---|---|---|---|---|---|---|---|---|---|---|---|---|---|
| Physical property of liquid crystal composition | S-N (℃) | <-40° | <-40° | <-40° | <-40° | <-40° | <-40° | <-40° | <-40° | <-40° | <-40° | <-40° | <-40° | <-40° | — | <-30° |
| | C. P (℃) | 62° | 60° | 62° | 64° | 58° | 60° | 60° | 57° | 63° | 60° | 59° | 59° | 58° | 58° | 57° |
| | Δn | 0.120 | 0.125 | 0.125 | 0.123 | 0.111 | 0.116 | 0.116 | 0.128 | 0.119 | 0.113 | 0.105 | 0.110 | 0.114 | 0.115 | 0.120 |
| | η (cP) | 24 | 27 | 25 | 30 | 22 | 22 | 24 | 24 | 27 | 24 | 25 | 26 | 31 | — | 25 |
| | Δε | 1.23 | 1.35 | 1.28 | 1.16 | — | 1.03 | 1.39 | — | 1.07 | — | 0.95 | — | — | 0.67 | 0.93 |
| | Δε/ε⊥ | 0.43 | 0.48 | 0.46 | 0.403 | — | 0.33 | 0.44 | — | 0.34 | — | 0.30 | — | — | 0.19 | 0.28 |

Table 15 (continued)

| Example No. | | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|
| Physical property of liquid crystal composition | S-N (℃) | <-40° | <-40° | <-40° | <-30° | <-40° | <-40° | <-40° | <-40° | <-40° | <-40° | <-20° | <-40° | < 0° | < 0° | <-40° | < 0° |
| | C. P (℃) | 58° | 56° | 59° | 58° | 60° | 60° | 59° | 58° | 57° | 60° | 55° | 55° | 56° | 60° | 62° | 57° |
| | Δn | 0.114 | 0.103 | 0.113 | 0.111 | 0.112 | 0.112 | 0.114 | 0.116 | 0.120 | 0.116 | 0.112 | 0.119 | 0.116 | 0.119 | 0.115 | 0.117 |
| | η (cP) | 31 | 29 | 25 | 25 | 27 | 26 | 23 | 25 | 24 | 23 | 26 | 21 | 28 | 28 | 26 | 23 |
| | Δε | — | — | — | — | 0.70 | 0.42 | — | — | — | — | — | 0.9 | — | — | 0.94 | 1.22 |
| | Δε/ε⊥ | — | — | — | — | 0.20 | 0.12 | — | — | — | — | — | 0.26 | — | — | 0.28 | 0.39 |

Table 15 (continued)

| Example No. | | 49 | 50 | 51 | 52 | 53 |
|---|---|---|---|---|---|---|
| Physical property of liquid crystal composition | S-N (℃) | <-30° | <-30° | <-40° | <-40° | < 40° |
| | C. P (℃) | 60° | 62° | 61° | 59° | 62° |
| | Δn | 0.137 | 0.126 | 0.117 | 0.132 | 0.119 |
| | η (cP) | 35 | 35 | 27 | 26 | 24 |
| | Δε | 1.06 | 0.98 | 1.28 | 1.05 | — |
| | Δε/ε⊥ | 0.34 | 0.29 | 0.41 | 0.37 | — |

Table 16

| Example No. | Elasticity Constant Ratio |
|---|---|
| 1 | 0.75 |
| 8 | 0.76 |
| 17 | 0.77 |
| 28 | 0.75 |
| 31 | 0.76 |
| 32 | 0.79 |
| 37 | 0.76 |
| 40 | 0.80 |
| 43 | 0.75 |
| 49 | 0.71 |

Table 17

| Liquid Crystal Element No. | | | 1 | 2 | 5 | 7 | 8 | 9 | 10 | 11 | 12 |
|---|---|---|---|---|---|---|---|---|---|---|---|
| Construction of Element: | d (μm) | | 6.06 | 6.28 | 5.47 | 6.3 | 5.35 | 5.5 | 5.6 | 6.0 | 5.9 |
| | Δnd (μm) | | 0.607 | 0.603 | 0.634 | 0.756 | 0.610 | 0.644 | 0.655 | 0.756 | 0.696 |
| Electro-optical property: Contrast | θ = 10° | $Y_{on}/Y_{off}$ | 19.3 | 15.5 | 17.5 | 29.5 | 20.4 | 16.7 | 19.6 | 23.7 | 20.2 |
| | | Vth (V) | 28.8 | 26.2 | 24.1 | 22.8 | 29.8 | 26.3 | 27.7 | 26.1 | 27.0 |
| Response speed (msec) | | | 49.0 (d=5.8) | 29.0 | 31.0 (d=6.26) | | | 27.4 | 34.0 | | 94.6 |
| property | | | | | | | 1.113 | | | | |

Table 17 (continued)

| Liquid Crystal Element No. | | | 17 | 18 | 19 | 20 | 21 | 23 | 24 | 25 | 28 | 29 | 30 |
|---|---|---|---|---|---|---|---|---|---|---|---|---|---|
| Construction of element: | d (μm) | | 6.0 | 6.0 | 6.0 | 5.9 | 6.0 | 5.3 | 5.2 | 5.3 | 5.8 | 5.5 | 5.6 |
| | Δnd (μm) | | 0.72 | 0.75 | 0.75 | 0.725 | 0.666 | 0.615 | 0.665 | 0.630 | 0.609 | 0.605 | 0.634 |
| Electro-optical property: Contrast | θ = 10° | $Y_{on}/Y_{off}$ | 21.4 | 22.4 | 21.8 | 22.2 | 23.4 | 15.4 | 18.3 | 19.2 | 19.6 | 23.4 | 17.6 |
| | | Vth (V) | 26.8 | 25.5 | 26.2 | 29.1 | 30.6 | 21.8 | 24.5 | 24.7 | 29.1 | 28.5 | 26.9 |
| Response speed (msec) | | | 30.9 | | | 95.0 | | 26.3 | 27.5 | | 35.6 | 29.8 (d=5.4) | 37.5 |
| property | | | | | | | 1.102 | | | | 1.111 | | |

Table 17 (continued)

| | | | | 31 | 32 | 33 | 34 | 35 | 36 | 37 | 38 | 39 | 40 | 41 | 42 | 43 |
|---|---|---|---|---|---|---|---|---|---|---|---|---|---|---|---|---|
| Liquid Crystal Element No. | | | | 31 | 32 | 33 | 34 | 35 | 36 | 37 | 38 | 39 | 40 | 41 | 42 | 43 |
| Construction of Element: | d (μm) | | | 5.8 | 5.6 | 6.2 | 6.0 | 5.9 | 5.6 | 5.5 | 5.6 | 5.3 | 5.9 | 6.0 | 5.8 | 5.5 |
| | Δnd (μm) | | | 0.667 | 0.672 | 0.706 | 0.618 | 0.666 | 0.621 | 0.616 | 0.627 | 0.604 | 0.634 | 0.720 | 0.672 | 0.616 |
| Electro-optical property: Contrast | θ = 10° | $Y_{ON}/Y_{OFF}$ | | 19.4 | | 15.4 | 15.2 | 21.1 | 24.3 | 17.9 | 26 | 14.8 | 23.9 | 33.2 | 18.7 | 20.7 |
| | | Vth (V) | | 30.7 | | 25.8 | 27.1 | 28.7 | 26.4 | 28.1 | 35.0 | 28.5 | 26.8 | 30.2 | 27.1 | 27.8 |
| Response speed (msec) | | | | | | 37.5 | 40.0 | 37.9 | 39.7 | 29.5 | 36.0 | 26.0 | 39.7 | | | 30.1 |
| γ property | | | | | 1.075 | | | 1.109 | 1.110 | | | | 1.109 | 1.101 | 1.105 | |

Table 17 (continued)

| Liquid Crystal Element No. | | | 44 | 45 | 46 | 47 | 48 | 49 | 50 | 51 | 52 |
|---|---|---|---|---|---|---|---|---|---|---|---|
| Construction of element: | d (μm) | | 5.5 | 5.7 | 6.3 | 6.0 | 5.3 | 4.9 | 5.4 | 5.3 | 5.6 |
| | Δnd (μm) | | 0.654 | 0.661 | 0.749 | 0.690 | 0.620 | 0.671 | 0.680 | 0.620 | 0.739 |
| Electro-optical property: Contrast θ = 10° | $Y_{ON}/Y_{OFF}$ | | 18.0 | 18.4 | 18.1 | 22.1 | 19.3 | 15.6 | 18.8 | 16.1 | 19.3 |
| | Vth (V) | | 25.8 | 26.8 | 27.1 | 26.9 | 23.0 | 26.5 | 27.9 | 22.3 | 25.8 |
| Response speed (msec) | | | 38 (d=6.2) | 34 (d=6.2) | | 34 | 27.6 | 34.0 (d=5.3) | 39 (d=5.8) | | 29.4 |
| γ property | | | | | | | | | | | |

Table 18

| Liquid Crystal Element No. | | | 3 | 4 | 24 | 25 | 28 | 30 | 32 | 33 | 34 | 35 | 36 | 37 |
|---|---|---|---|---|---|---|---|---|---|---|---|---|---|---|
| Electro-optical property: Contrast | $\theta = -10^\circ$ | $Y_{on}/Y_{off}$ | 10.42 | 6.17 | | 10 | 8.8 | | 8.6 | 10.2 | 8.29 | 9.64 | 9.27 | |
| | | Vth (V) | 31.7 | 28.8 | | 23.7 | 26.8 | | 28.9 | 34.2 | 29.5 | 28.3 | 29.9 | |
| | $\theta = 30^\circ$ | $Y_{on}/Y_{off}$ | 15.76 | 10.69 | 14.4 | 11.02 | 15.9 | 15.5 | 23.4 | 21.7 | 25.8 | 16.7 | 13.5 | 18.9 |
| | | Vth (V) | 26.9 | 24.3 | 24.8 | 19.8 | 22.6 | 27.4 | 25.6 | 28.8 | 25.2 | 24.4 | 25.1 | 26.4 |
| Visual angle property | | $\frac{Vth(\theta = -10^\circ)}{Vth(\theta = 10^\circ)}$ | 1.101 | 1.099 | | 1.087 | 1.121 | | 1.074 | 1.114 | — | 1.097 | 1.103 | |
| | | $\frac{Vth(\theta = 30^\circ)}{Vth(\theta = 10^\circ)}$ | 0.934 | 0.927 | 0.965 | 0.908 | 0.946 | 0.941 | 0.952 | 0.938 | — | 0.946 | 0.926 | 0.920 |

Table 18 (continued)

| Liquid Crystal Element No. | | | 38 | 40 | 41 | 42 |
|---|---|---|---|---|---|---|
| Electro-optical property: Contrast | $\theta = -10^\circ$ | $Y_{on}/Y_{off}$ | | 9.5 | 8.86 | |
| | | Vth (V) | | 39.9 | 31.5 | |
| | $\theta = 30^\circ$ | $Y_{on}/Y_{off}$ | 30.9 | 28.2 | 12.9 | 21.2 |
| | | Vth (V) | 25.1 | 34.0 | 26.5 | 25.2 |
| Visual angle property | | $\frac{Vth(\theta = -10^\circ)}{Vth(\theta = 10^\circ)}$ | | 1.14 | 1.105 | |
| | | $\frac{Vth(\theta = 30^\circ)}{Vth(\theta = 10^\circ)}$ | 0.951 | 0.971 | 0.930 | 0.940 |

Further examples of liquid crystal compositions according to this invention are given below:

Example 54

A liquid crystalline composition consisting of
3 % 2-p-cyanophenyl-5-pentyl-1,3-dioxane,

10 % trans-1-p-propylphenyl-4-pentylcyclohexane.
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
9 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane,
3 % trans-4-(trans-4-propylcyclohexyl)-methylcyclohexane
and
3 % trans-4-(trans-4-propylcyclohexyl)-ethylcyclohexane
has a clearing point of 47.0°, $\Delta\epsilon$ = 1.2 and $\Delta n$ = 0.125.

Example 55

A liquid crystalline composition consisting of
3 % 2-p-cyanophenyl-5-pentyl-1,3-dioxane,
10 % trans-1-p-propylphenyl-4-pentylcyclohexane,
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohelxyl)-cyclohexyl]-2-(p-methylphenyl)-ethane,
9 % 1-[trans-4-(trans-4-propylcyclohelxyl)-cyclohexyl]-2-(p-propylphenyl)-ethane,
9 % 1-[trans-4-(trans-4-propylcyclohexyl)-cyclohexyl]-2-(p-pentylphenyl)-ethane,
and
3 % trans-4-(trans-4-propylcyclohexyl)-ethoxymethylenecyclohexane
has a clearing point of 47.0°, $\Delta\epsilon$ = 1.2 and $\Delta n$ = 0.124.

Example 56

A liquid crystalline composition consisting of
10 % trans-1-p-propylphenyl-4-pentylcyclohexane,
10 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
9 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane,
4 % 1-[trans-4-(trans-4-propylcyclohexyl)-cyclohexyl]-2-(p-fluorphenyl)-ethane and
4 % 1-[trans-4-(trans-4-pentylcyclohexyl)-cyclohexyl]-2-(p-fluorphenyl)-ethane
has a clearing point of 64°, $\Delta\epsilon$ = 1.0 and $\Delta n$ = 0.123.

Example 57

A liquid crystalline composition consisting of
10 % trans-1-p-propylphenyl-4-pentylcyclohexane,
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethlyphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
11 % 1-[trans-4-(trans-4-propylcyclohexyl)-cyclohexyl]-2-(p-methylphenyl)-ethane,
11 % 1-[trans-4-(trans-4-propylcyclohexyl)-cyclohexyl]-2-(p-propylphenyl)-ethane,
11 % 1-[trans-4-(trans-4-propylcyclohexyl)-cyclohexyl]-2-(p-pentylphenyl)-ethane and
3 % 1-[trans-4-(trans-4-propylcyclohexyl)-cyclohexyl]-2-(p-cyanphenyl)-ethane
has a clearing point of 65°, $\Delta\epsilon$ = 1.4 and $\Delta n$ = 0.124.

Example 58

A liquid crystalline composition consisting of
10 % trans-1-p-ethylphenyl-4-propylcyclohexane,
8 % trans-1-p-ethoxyphenyl-4-propylcyclohexane,
6 % 2-p-ethylphenyl-5-propylpyrimidine,
6 % 2-p-propylphenyl-5-propylpyrimidine,
6 % 2-p-ethylphenyl-5-heptylpyrimidine,
5 % 2-p-nonyloxyphenyl-5-hexylpyrimidine,
5 % 2-p-hexyloxyphenyl-5-nonylpyrimidine,
5 % 2-p-nonyloxyphenyl-5-nonylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
9 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane,
9 % 1-[trans-4-(trans-4-propylcyclohexyl)-cyclohexyl]-2-(p-ethylphenyl)-ethane and
3 % 1-[trans-4-(trans-4-propylcyclohexyl)-cyclohexyl]-2-(p-cyanophenyl)-ethane
has a clearing point of 68°, $\Delta\epsilon$ = 0.46 and $\Delta n$ = 0.121.

Example 59

A liquid crystalline composition consisting of
10 % trans-1-p-butanoyloxyphenyl-4-propylcyclohexane
9 % trans-1-p-ethoxyphenyl-4-propylcyclohexane
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
3 % 1-[trans-4-(trans-4-propylcyclohexyl)-cyclohexyl]-2-(p-cyanophenyl)-ethane
has a clearing point of 70°, $\Delta\epsilon$ = 1.3 and $\Delta n$ = 0.127.

Example 60

A liquid crystalline composition consisting of
10 % trans-1-p-propylphenyl-4-pentylcyclohexane,
8 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 67°, $\Delta\epsilon$ = 0.55 and $\Delta n$ = 0.124.

Example 61

A liquid crystalline composition consisting of
12 % trans-1-p-ethylphenyl-4-propylcyclohexane,
15 % trans-1-p-methoxyphenyl-4-propylcyclohexane,
5 % 4-butyl-4′-propyl-tolane,
4 % 4-pentyl-4′-propyl-tolane,
4 % 4-butyl-4′-pentyl-tolane,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
3 % 1-[trans-4-(trans-4-propylcyclohexyl)-cyclohexyl]-2-(p-cyanophenyl)-ethane
has a clearing point of 60°, $\Delta\epsilon$ = 0.78 and $\Delta n$ = 0.119.

Example 62

A liquid crystalline composition consisting of
9 % trans-1-p-ethylphenyl-4-propylcyclohexane,
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane

has a clearing point of 65°, Δε = 1.4 and Δn = 0.123.

Example 63

A liquid crystalline composition consisting of
6 % trans-1-p-ethylphenyl-4-propylcyclohexane,
5 % trans-1-p-ethoxyphenyl-4-propylcyclohexane,
9 % trans-1-p-butanoyloxyphenyl-4-propylcyclohexane,
6 % 2-p-ethylphenyl-5-propylpyrimidine,
6 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane and
8 % 1-[trans-4-(trans-4-propylcyclohexyl)-cyclohexyl]-2-(p-ethylphenyl)-ethane
has a clearing point of 67°, Δε = 1.4 and Δn = 0.123.

Example 64

A liquid crystalline composition consisting of
11 % trans-1-p-ethylphenyl-4-propylcyclohexane,
9 % trans-1-p-butanoyloxyphenyl-4-propylcyclohexane,
6 % 2-p-ethylphenyl-5-propylpyrimidine,
6 % 2-p-propylphenyl-5-propylpyrimidine,
6 % 2-p-ethlyphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
9 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-pentylcyclohexyl)-cyclohexyl]-2-(p-cyanophenyl)-ethane
has a clearing point of 63°, Δε = 1.3 and Δn = 0.119.

Example 65

A liquid crystalline composition consisting of
6 % trans-1-p-ethylphenyl-4-propylcyclohexane,
9 % trans-1-p-ethoxyphenyl-4-propylcyclohexane,
9 % trans-1-p-butanoyloxyphenyl-4-propylcyclohexane,
6 % 2-p-ethylphenyl-5-propylpyrimidine,
6 % 2-p-propylphenyl-5-propylpyrimidine,
6 % 2-p-ethylphenyl-5-heptylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,

9 % 1-[trans-4-(trans-4-propylcyclohexyl)-cyclohexyl]-2-(p-pentylphenyl)-ethane and
8 % 1-[trans-4-(trans-4-propylcyclohexyl)-cyclohexyl]-2-(p-ethylphenyl)-ethane
has a clearing point of 68°, $\Delta\epsilon$ = 1.5 and $\Delta n$ = 0.123.

Example 66

A liquid crystalline composition consisting of
9 % trans-1-p-ethylphenyl-4-propylcyclohexane,
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 66°, $\Delta\epsilon$ = 1.5 and $\Delta n$ = 0.123, $K_3/K_1$ = 0.74 and $V_{(10,0,20)}$ = 4.19 Volt.

Example 67

A liquid crystalline composition consisting of
9 % trans-1-p-ethylphenyl-4-propylcyclohexane,
9 % trans-1-p-ethoxyphenyl-4-propylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 66°, $\Delta\epsilon$ = 1.5 and $\Delta n$ = 0.123.

Example 68

A liquid crystalline composition consisting of
2 % 2-p-cyanophenyl-5-pentyl-1,3-dioxane,
6 % trans-1-p-propylphenyl-4-pentylcyclohexane,
9 % trans-1-p-ethoxyphenyl-4-propylcyclohexane,
6 % 4-butyl-4′-propyl-tolane,
6 % 4-pentyl-4′-propyl-tolane,
5 % 4-butyl-4′-pentyl-tolane,
7 % 2-p-ethylphenyl-5-propylpyrimidine,
7 % 2-p-propylphenyl-5-propylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,

5 % 2-p-heptyloxyphenyl-5-heptylpyrimidine,
5 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane and
3 % 1-[trans-4-(trans-4-propylcyclohexyl)-4′-methoxy-tolane
has a clearing point of 55°, $\Delta\epsilon$ = 1.2 and $\Delta n$ = 0.146.

Example 69

A liquid crystalline composition consisting of
10 % trans-1-p-ethoxyphenyl-4-propylcyclohexane,
7 % 4-butyl-4′-propyl-tolane,
7 % 4-pentyl-4′-propyl-tolane,
7 % 4-butyl-4′-pentyl-tolane,
7 % 2-p-ethylphenyl-5-propylpyrimidine,
6 % 2-p-propylphenyl-5-propylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
7 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
6 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 63°, $\Delta\epsilon$ = 1.3 and $\Delta n$ = 0.151.

Example 70

A liquid crystalline composition consisting of
6 % trans-1-p-propylphenyl-4-pentylcyclohexane,
10 % trans-1-p-ethoxyphenyl-4-pentylcyclohexane,
5 % 4-butyl-4′-propyl-tolane,
5 % 4-pentyl-4′-propyl-tolane,
5 % 4-butyl-4′-pentyl-tolane,
6 % 2-p-ethylphenyl-5-propylpyrimidine,
6 % 2-p-propylphenyl-5-propylpyrimidine,
5 % 2-p-pentyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
7 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 63°, $\Delta\epsilon$ = 1.3 and $\Delta n$ = 0.139.

Example 71

A liquid crystalline composition consisting of
6 % trans-1-p-propylphenyl-4-pentylcyclohexane,
10 % trans-1-p-ethoxyphenyl-4-propylcyclohexane,
5 % 4-butyl-4′-propyl-tolane,
5 % 4-pentyl-4′-propyl-tolane,

5 % 4-butyl-4′-pentyl-tolane,
6 % 2-p-ethylphenyl-5-propylpyrimidine,
6 % 2-p-propylphenyl-5-propylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
7 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 64°, $\Delta\epsilon$ = 1.3 and $\Delta n$ = 0.140.

Example 72

A liquid crystalline composition consisting of
6 % trans-1-p-propylphenyl-4-pentylcyclohexane,
10 % trans-1-p-ethoxyphenyl-4-propylcyclohexane,
8 % 4-pentyl-4′-propyl-tolane,
7 % 4-butyl-4′-pentyl-tolane,
6 % 2-p-ethylphenyl-5-propylpyrimidine,
6 % 2-p-propylphenyl-5-propylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
7 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 65°, $\Delta\epsilon$ = 1.4 and $\Delta n$ = 0.140.

Example 73

A liquid crystalline composition consisting of
6 % trans-1-p-propylphenyl-4-pentylcyclohexane,
11.6 % trans-1-p-ethoxyphenyl-4-propylcyclohexane,
6.8 % 4-pentyl-4′-propyl-tolane,
6.2 % 4-butyl-4′-pentyl-tolane,
1.2 % 4-ethoxy-4′-methyl-tolane,
6 % 2-p-ethylphenyl-5-propylpyrimidine,
6 % 2-p-propylphenyl-5-propylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
6.6 % 1-[trans-4-(trans-4-propylcyclohexyl)-cyclohexyl]-2-(p-methylphenyl)-ethane,
7.0 % 1-[trans-4-(trans-4-propylcyclohexyl)-cyclohexyl]-2-(p-propylphenyl)-ethane and
6.6 % 1-[trans-4-(trans-4-propylcyclohexyl)-cyclohexyl]-2-(p-ethylphenyl)-ethane
has a clearing point of 63°, $\Delta\epsilon$ = 1.2 and $\Delta n$ = 0.139.

Example 74

A liquid crystalline composition consisting of
9 % trans-1-p-ethylphenyl-4-propylcyclohexane,
9 % trans-trans-4-propyl-4′-propoxy-cyclohexylcyclohexane,
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 69°, $\Delta\epsilon$ = 1.4 and $\Delta n$ = 0.119.

Example 75

A liquid crystalline composition consisting of
9.4 % trans-1-p-ethylphenyl-4-propylcyclohexane,
9.4 % trans, trans-4-propyl-4′-propoxy-cyclohexyl-cyclohexane,
7.3 % 2-p-ethylphenyl-5-propylpyrimidine,
7.3 % 2-p-propylphenyl-5-propylpyrimidine,
6.3 % 2-p-ethylphenyl-5-heptylpyrimidine,
5.2 % 2-p-hexyloxyphenyl-5-nonylpyrimidine,
5.2 % 2-p-nonyloxyphenyl-5-nonylpyrimidine,
5.2 % 2-p-nonyloxyphenyl-5-hexylpyrimidine,
5.2 % 2-p-hexyloxyphenyl-5-heptylpyrimidine,
5.2 % 2-p-hexyloxyphenyl-5-heptylpyrimidine,
9.4 % 1-[trans-4-(trans-4-propylcyclohexyl)-cyclohexyl]-2-(p-methylphenyl)-ethane,
8.3 % 1-[trans-4-(trans-4-propylcyclohexyl)-cyclohexyl]-2-(p-propylphenyl)-ethane,
8.3 % 1-[trans-4-(trans-4-propylcyclohexyl)-cyclohexyl]-2-(p-pentylphenyl)-ethane and
8.3 % 1-[trans-4-(trans-4-propylcyclohexyl)-cyclohexyl]-2-(p-ethylphenyl)-ethane
has a clearing point of 62°, $\Delta\epsilon$ = 0.8 and $\Delta n$ = 0.118.

Example 76

A liquid crystalline composition consisting of
16 % trans-1-p-ethylphenyl-4-propylcyclohexane,
5 % trans-1-p-methoxyphenyl-4-propylcyclohexane,
6 % 2-p-ethylphenyl-5-propylpyrimidine,
6 % 2-p-propylphenyl-5-propylpyrimidine,
5 % 2-p-ethylphenyl-5-heptylpyrimidine,
4 % 2-p-hexyloxyphenyl-5-nonylpyrimidine,
4 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,
4 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
7 % 1-[trans-4-(trans-4-propylcyclohexyl)-cyclohexyl]-2-(p-fluorophenyl)-ethane
has a clearing point of 62°, $\Delta\epsilon$ = 1.2 and $\Delta n$ = 0.111.

Example 77

A liquid crystalline composition consisting of
9 % trans-1-p-ethylphenyl-4-propylcyclohexane,
9 % trans,trans-4-propoxy-4′-propyl-cyclohexylcyclohexane,
4 % 1-(p-cyanophenyl)-2-(trans-4-propylcyclohexyl)-ethane
7 % 2-p-ethylphenyl-5-propylpyrimidine,
7 % 2-p-propylphenyl-5-propylpyrimidine,
6 % 2-p-ethylphenyl-5-heptylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane and
8 % 1-[trans-4-(trans-4-propylcyclohexyl)-cyclohexyl]-2-(p-ethylphenyl)-ethane
has a clearing point of 62°, $\Delta\epsilon$ = 1.4 and $\Delta n$ = 0.117.

Example 78

A liquid crystalline composition consisting of
9 % trans-1-p-ethylphenyl-4-propylcyclohexane,
9 % trans,trans-4'-propoxy-4-propyl-cyclohexylcyclohexane,
7 % 2-p-ethylphenyl-5-propylpyrimidine,
7 % 2-p-propylphenyl-5-propylpyrimidine,
7 % 2-p-ethylphenyl-5-heptylpyrimidine,
7 % 2-p-propylphenyl-5-pentylpyrimidine,
3 % 2-p-hexyloxyphenyl-5-nonylpyrimidine,
3 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,
3 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane and
8 % 1-[trans-4-(trans-4-propylcyclohexyl)-cyclohexyl]-2-(p-ethylphenyl)-ethane
has a clearing point of 63°, $\Delta\epsilon$ = 1.6 and $\Delta n$ = 0.119.

Example 79

A liquid crystalline composition consisting of
12 % trans-1-p-ethylphenyl-4-propylcyclohexane,
6 % trans-1-p-methoxyphenyl-4-propylcyclohexane,
8 % trans,trans-4'-propoxy-4-propylcyclohexylcyclohexane,
5 % 2-p-ethylphenyl-5-propylpyrimidine,
5 % 2-p-propylphenyl-5-propylpyrimidine,
5 % 2-p-hexyloxyphenyl-5-hexylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
5 % 2-p-hexyloxyphenyl-5-nonylpyrimidine,
5 % 2-p-nonyloxyphenyl-5-heptylpyrimidine,
6 % 1-[trans-4-(trans-4-propylcyclohexyl)-cyclohexyl]-2-(p-methylphenyl)-ethane,
6 % 1-[trans-4-(trans-4-propylcyclohexyl)-cyclohexyl]-2-(p-propylphenyl)-ethane,
6 % 1-[trans-4-(trans-4-propylcyclohexyl)-cyclohexyl]-2-(p-pentylphenyl)-ethane,

7 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 60°, $\Delta\epsilon$ = 1.2 and $\Delta n$ = 0.114.

Example 80

A liquid crystalline composition consisting of
9 % trans-1-p-ethylphenyl-4-propylcyclohexane,
9 % trans,trans-4-propoxy-4′-propyl-cyclohexylcyclohexane,
7 % 2-p-ethylphenyl-5-propylpyrimidine,
7 % 2-p-propylphenyl-5-propylpyrimidine,
7 % 2-p-ethylphenyl-5-heptylpyrimidine,
7 % 2-p-propylphenyl-5-pentylpyrimidine,
3 % 2-p-hexyloxyphenyl-5-nonylpyrimidine,
3 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,
3 % 2-p-nonyloxyphenyl-5-heptylpyrimidine,
8 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
8 % 1-[trans-4-(trans-4-propylcyclohexyl)-cyclohexyl]-2-(p-cyanophenyl)-ethane
has a clearing point of 65°, $\Delta\epsilon$ = 2.1 and $\Delta n$ = 0.120.

Example 81

A liquid crystalline composition consisting of
17 % trans-1-p-ethylphenyl-4-propylcyclohexane,
5 % trans-1-p-methoxyphenyl-4-propylcyclohexane,
6 % 2-p-ethylphenyl-5-propylpyrimidine,
6 % 2-p-propylphenyl-5-propylpyrimidine,
6 % 2-p-ethylphenyl-5-heptylpyrimidine,
4 % 2-p-hexyloxyphenyl-5-nonylpyrimidine,
4 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,
4 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
8 % 1-[trans-4-(trans-4-propylcyclohexyl)-cyclohexyl]-2-(p-cyanophenyl)-ethane
has a clearing point of 62°, $\Delta\epsilon$ = 1.9 and $\Delta n$ = 0.113.

Example 82

A liquid crystalline composition consisting of
9 % trans-1-p-ethylphenyl-4-propylcyclohexane,
9 % trans,trans-4-methoxy-4′-propyl-cyclohexylcyclohexane,
7 % 2-p-ethylphenyl-5-propylpyrimidine,
7 % 2-p-propylphenyl-5-propylpyrimidine,
7 % 2-p-ethylphenyl-5-heptylpyrimidine,
7 % 2-p-propylphenyl-5-pentylpyrimidine,
3 % 2-p-hexyloxyphenyl-5-nonylpyrimidine,
3 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,

3 % 2-p-nonyloxyphenyl-5-heptylpyrimidine,
8 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
7 % 1-[trans-4-(trans-4-propylcyclohexyl)-cyclohexyl]-2-(p-ethylphenyl)-ethane and
8 % 1-[trans-4-(trans-4-propylcyclohexyl)-cyclohexyl]-2-(p-cyanophenyl)-ethane
has a clearing point of 63°, $\Delta\epsilon$ = 2.2 and $\Delta n$ = 0.118.

Example 83

A liquid crystalline composition consisting of
5 % trans-1-p-ethylphenyl-4-propylcyclohexane,
9 % trans,trans-4-methoxy-4′-propylcyclohexylcyclohexane,
7 % 2-p-ethylphenyl-5-propylpyrimidine,
7 % 2-p-propylphenyl-5-propylpyrimidine,
10 % 2-p-ethylphenyl-5-heptylpyrimidine,
9 % 2-p-propylphenyl-5-pentylpyrimidine,
3 % 2-p-hexyloxyphenyl-5-nonylpyrimidine,
3 % 2-p-nonyloxyphenyl-5-nonylpyrimidine,
4 % 2-p-nonyloxyphenyl-5-hexylpyrimidine,
4 % 2-p-heptyloxyphenyl-5-heptylpyrimidine,
3 % 2-p-nonyloxyphenyl-5-heptylpyrimidine,
8 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
8 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 62°, $\Delta\epsilon$ = 1.7 and $\Delta n$ = 0.123.

Example 84

A liquid crystalline composition consisting of
3 % trans-1-p-ethylphenyl-4-propylcyclohexane,
8 % trans,trans-4-methoxy-4′-propyl-cyclohexylcyclohexane,
8 % 2-p-ethylphenyl-5-propylpyrimidine,
8 % 2-p-propylphenyl-5-propylpyrimidine,
12 % 2-p-ethylphenyl-5-heptylpyrimidine,
10 % 2-p-propylphenyl-5-pentylpyrimidine,
3 % 2-p-hexyloxyphenyl-5-nonylpyrimidine,
3 % 2-p-nonyloxyphenyl-5-nonylpyrimidine,
3 % 2-p-heptyloxyphenyl-5-heptylpyrimidine,
3 % 2-p-nonyloxyphenyl-5-heptylpyrimidine,
9 % 1-[trans-4-(trans-4-propylcyclohexyl)-cyclohexyl]-2-(p-methylphenyl)-ethane,
9 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane,
9 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 65°, $\Delta\epsilon$ = 1.7 and $\Delta n$ = 0.125.

Example 85

A liquid crystalline composition consisting of
10 % trans-1-p-propylphenyl-4-pentylcyclohexane,
6 % trans-1-p-ethoxyphenyl-4-propylcyclohexane,
1 % 4-pentyl-4′-cyanobiphenyl,
8 % 2-p-ethylphenyl-5-propylpyrimidine,
8 % 2-p-propylphenyl-5-propylpyrimidine,
7 % 2-p-ethlyphenyl-5-heptylpyrimidine,

7 % 2-p-methoxyphenyl-5-heptylpyrimidine,
5 % 2-p-heptyloxyphenyl-5-hexylpyrimidine,
5 % 2-p-nonyloxyphenyl-5-hexylpyrimidine,
5 % 2-heptyloxyphenyl-5-heptylpyrimidine,
5 % 2-p-nonyloxyphenyl-5-heptylpyrimidine,
11 % 1-[trans-4-(trans-4-propylcyclohexyl)-cyclohexyl]-2-(p-methylphenyl)-ethane,
11 % 1-[trans-4-(trans-4-propylcyclohexyl)-cyclohexyl]-2-(p-propylphenyl)-ethane and
11 % 1-[trans-4-(trans-4-propylcyclohexyl)-cyclohexyl]-2-(p-pentylphenyl)-ethane
has a clearing point of 60°, $\Delta\epsilon$ = 1.1 and $\Delta n$ = 0.128.

Example 86

A liquid crystalline composition consisting of
10 % trans-1-p-propylphenyl-4-pentylcyclohexane,
6 % trans-1-p-ethoxyphenyl-4-propylcyclohexane,
1 % 4-pentyl-4′-cyanobiphenyl,
6 % 2-p-ethylphenyl-5-propylpyrimidine,
6 % 2-p-propylphenyl-5-propylpyrimidine,
5 % 2-p-ethlyphenyl-5-heptylpyrimidine,
6 % 2-p-propylphenyl-5-pentylpyrimidine,
7 % 2-p-methoxyphenyl-5-heptylpyrimidine,
5 % 2-p-heptyloxyphenyl-5-hexylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
9 % 1-[trans-4-(trans-4-propylcyclohexyl)-cyclohexyl]-2-(p-methylphenyl)-ethane,
8 % 1-[trans-4-(trans-4-propylcyclohexyl)-cyclohexyl]-2-(p-propylphenyl)-ethane,
8 % 1-[trans-4-(trans-4-propylcyclohexyl)-cyclohexyl]-2-(p-pentylphenyl)-ethane and
8 % 1-[trans-4-(trans-4-propylcyclohexyl)-cyclohexyl]-2-(p-ethylphenyl)-ethane
has a clearing point of 61°, $\Delta\epsilon$ = 1.2 and $\Delta n$ = 0.129.

Example 87

A liquid crystalline composition consisting of
6 % trans-1-p-propylphenyl-4-pentylcyclohexane,
14 % trans-1-p-ethoxyphenyl-4-propylcyclohexane,
5 % 4-pentyl-4′-propyl-tolane,
5 % 4-butyl-4′-pentyl-tolane,
3 % 4-ethoxy-4′-methyl-tolane,
6 % 2-p-ethylphenyl-5-propylpyrimidine,
6 % 2-p-propylphenyl-5-propylpyrimidine,
5 % 2-p-hexyloxyphenyl-5-nonylpyrimidine,
5 % 2-p-nonyloxyphenyl-5-nonylpyrimidine,
5 % 2-p-nonyloxyphenyl-5-hexylpyrimidine,
5 % 2-p-heptyloxyphenyl-5-heptylpyrimidine,
5 % 2-p-nonyloxyphenyl-5-heptylpyrimidine,
6 % 1-[trans-4-(trans-4-propylcyclohexyl)-cyclohexyl]-2-(p-methylphenyl)-ethane,
7 % 1-[trans-4-(trans-4-propylcyclohexyl)-cyclohexyl]-2-(p-propylphenyl)-ethane,
7 % 1-[trans-4-(trans-4-propylcyclohexyl)-cyclohexyl]-2-(p-pentylphenyl)-ethane,
6 % 1-[trans-4-(trans-4-propylcyclohexyl)-cyclohexyl]-2-(p-ethylphenyl)-ethane and
4 % 1-[trans-4-(trans-4-propylcyclohexyl)-cyclohexyl]-2-(p-cyanophenyl)-ethane
has a clearing point of 64°, $\Delta\epsilon$ = 1.3 and $\Delta n$ = 0.140.

## Claims

**1.** A liquid crystal mixture in a twisted nematic liquid crystal display device operating in the high multiplex mode and having a high contrast, said mixture having a ratio of the elastic constants $K_3/K_1$ as small as possible but not more than 0.8 and a ratio of $\Delta\epsilon/\epsilon_\perp$ of at most 0.5 and comprises

(a) at least 10 wt% of a first liquid crystal material comprising at least one of liquid crystal compounds represented by general formula:

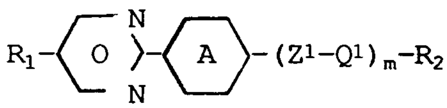

(I)

wherein $R_1$ represents a group R; and $R_2$ represents R or OR; R being in each case independently a straight chain alkyl group having up to 12 carbon atoms, wherein one or two non-adjacent $CH_2$ groups may be replaced by -O- and/or -CH=CH-, two oxygen atoms not being directly attached to each other,

A is 1,4-phenylene or trans-1,4-cyclohexylene,

$Z^1$ is -CO-O-, -O-CO-, $CH_2$-O-, -$OCH_2$-, -$CH_2CH_2$- or a single bond,

$Q^1$ is 1,4-phenylene or trans-1,4-cyclohexylene, and m is 0, 1 or 2,

(b) less than 10 wt% of a second liquid crystal material comprising one or more liquid crystal compounds having a distinct positive dielectric anisotropy ($\Delta\epsilon \geqq +3$); and,

(c) less than 90 wt% of a third liquid crystal material comprising at least one liquid crystal compound having a negative or substantially neutral dielectric anisotropy,

whereby the second liquid crystal material can be absent if the first and third liquid crystal material is selected in such a manner that the resulting mixture has a slightly positive $\Delta\epsilon$ and a $\Delta\epsilon/\epsilon_\perp$ in the range of 0.04 to 0.3.

**2.** An improved liquid crystal mixture according to claim 1 in a device operating in the first Gooch and Tarry transmission minimum.

**3.** An improved liquid crystal mixture according to claim 2 in a device, wherein the electro-optical characteristic curve is at least as steep as that curve in the second such transmission minimum.

**4.** An improved liquid crystal mixture according to claim 3 in a device, wherein the steepness of the characteristic curve in the first minimum is greater than that in the second minimum.

**5.** An improved liquid crystal mixture according to claim 1 in a device, wherein $K_3/K_1$ is 0.4 to 0.8 and $\Delta\epsilon/\epsilon_\perp$ is 0.04 to 0.3.

**6.** An improved liquid crystal mixture according to claim 1 in a device, wherein $K_3/K_1$ is 0.2 to 0.75 and $\Delta\epsilon/\epsilon_\perp$ is 0.1 to 0.3.

**7.** An improved liquid crystal mixture according to claim 1 which comprises at least five components.

**8.** An improved liquid crystal mixture according to claim 1 in a device, wherein $K_3/K_1$ is 0.2 to 0,75 and $\Delta\epsilon/\epsilon_\perp$ is 0.1 to 0,3

**9.** An improved liquid crystal mixture according to claim 1, wherein the first liquid crystal material comprises at least one of liquid crystal compounds represented by the general formula Ia

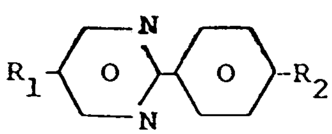

Ia

wherein $R_1$ and $R_2$ have the meaning given in claim 1.

**10.** An improved liquid crystal mixture according to claim 1, wherein the second liquid crystal material comprises at least one of liquid crystal compounds represented by the general formulae II to V:

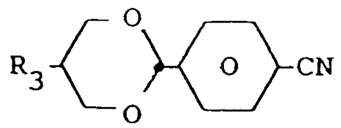

II

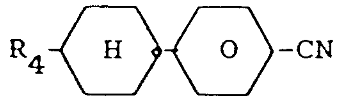

III

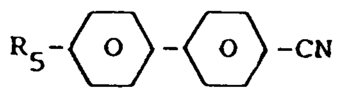

IV

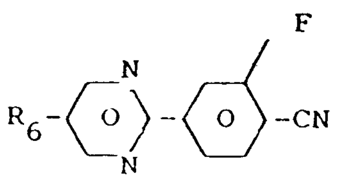

V

wherein $R_3$, $R_4$, $R_5$ and $R_6$ independently represent a straight chain alkyl group having up to 12 carbon atoms, wherein one or two non-adjacent $CH_2$ groups may be replaced by -O- or -CH=CH-, two oxygen atoms not being directly attached to each other.

**11.** An improved liquid crystal mixture according to claim 1, wherein the third liquid crystal material comprises liquid crystal compounds having a dielectric anisotropy of -1 to +1.

**12.** An improved liquid crystal mixture according to claim 1, wherein the third liquid crystal material comprises at least one of liquid crystal compounds represented by the general formulae VI to VIII;

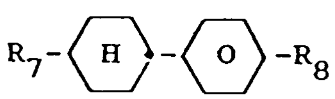

VI

wherein $R_7$ represents R; and $R_8$ represents R or OR,

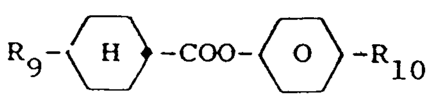

VII

wherein $R_9$ represents R; and $R_{10}$ represents R or OR,

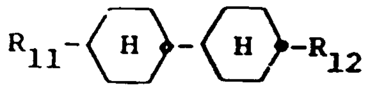

VIII

wherein $R_{11}$ represents R; and $R_{12}$ represents R or OR;
R being in each case independently a straight chain alkyl group having up to 12 carbon atoms wherein one or two non-adjacent $CH_2$ groups may be replaced by -O- or -CH=CH-, two oxygen atoms not being directly attached to each other.

**13.** An improved liquid crystal mixture according to claim 1, wherein the third liquid crystal material further comprises at least one of liquid crystal compounds represented by general formulae IX to XIV:

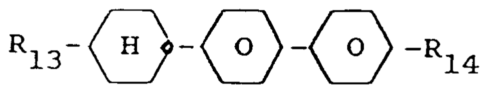

IX

wherein $R_{13}$ and $R_{14}$ represent independently from each other R

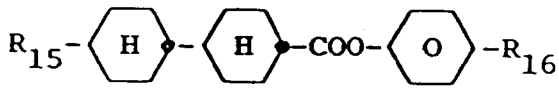

X

wherein $R_{15}$ and $R_{16}$ represent independently from each other R;

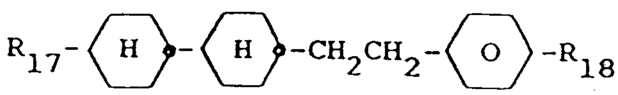

XI

wherein $R_{17}$ and $R_{18}$ represent independently from each other R;

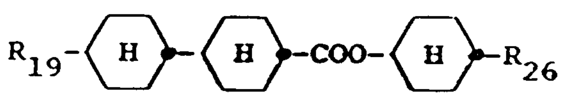

XII

wherein $R_{19}$ and $R_{20}$ represent independently from each other R;

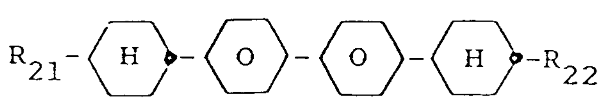

XIII

wherein $R_{21}$ and $R_{22}$ represent independently from each other R;

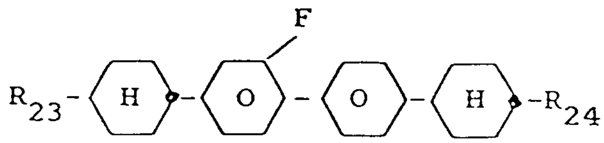

XIV

wherein $R_{23}$ and $R_{24}$ represent independently from each other R, R being in each case independently a straight chain alkyl group having up to 12 carbon atoms, wherein one or two non-adjacent $CH_2$ groups may be replaced by -O- or -CH=CH-, two oxygen atoms not being directly attached to each other.

**14.** An improved liquid crystal mixture according to claim 1, wherein the formulation ratios of said first liquid crystal material, said second liquid crystal material and said third liquid crystal material are at least 30 wt%, less than 10 wt% and less than 70 wt%, respectively.

**15.** An improved liquid crystal mixture according to claim 1, wherein the formulation ratios of said first liquid crystal material, said second liquid crystal material and said third liquid crystal material are 30 to 65 wt%, less than 5 wt% and 35 to 70 wt%, respectively.

**16.** An improved liquid crystal mixture according to claim 1, wherein the second liquid crystal material comprises at least one of liquid crystal compounds represented by the general formulae IIf to IIh:

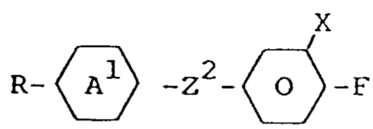

IIf

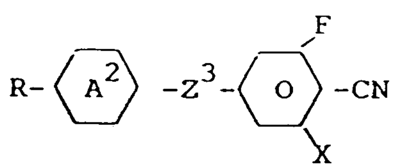

IIg

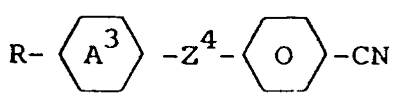

IIh

wherein
$A^1$ is

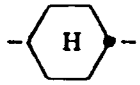, 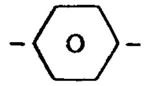, 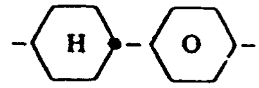,

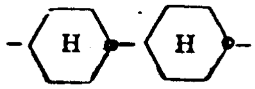, 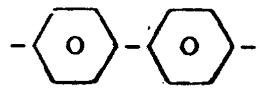,

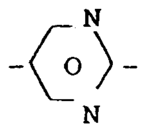, 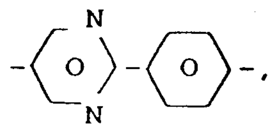, 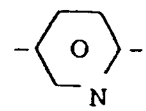

or 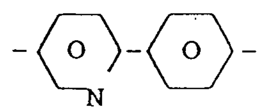,

| | |
|---|---|
| $Z^2$ is | -CO-O-, -O-CO-, $-CH_2CH_2-$ or a single bond, |
| X is | hydrogen or fluorine, |
| $A^2$ and $A^3$ are | in each case |

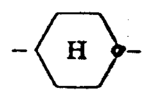, 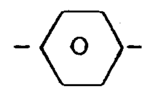,

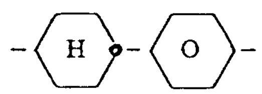, 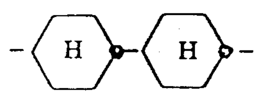 or

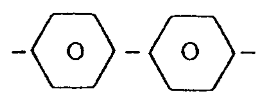,

| | |
|---|---|
| $Z^3$ is | -CO-O-, -O-CO-, $-CH_2O-$, $-CH_2CH_2-$ or a single bond, |
| $Z^4$ is | -CO-O-, -O-CO- or $-CH_2CH_2-$, and |

R being in each case independently a straight chain alkyl group having up to 12 carbon atoms, wherein one or two non-adjacent $CH_2$ groups may be replaced by-O- or -CH = CH-, two oxygen atoms not being directly attached to each other.

**17.** An improved liquid crystal mixture according to claim 16, wherein the second liquid crystal material comprises at least one of liquid crystal compounds represented by the general formula

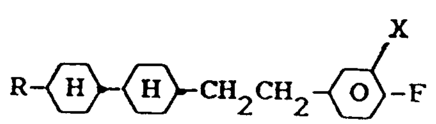

wherein R and X have the meaning given in claim 16.

**18.** An improved liquid crystal mixture according to claim 16, wherein the second liquid crystal material comprises at least one of liquid crystal compounds represented by the general formulae

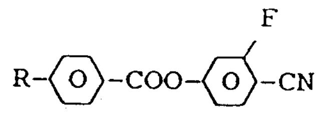

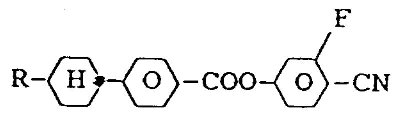

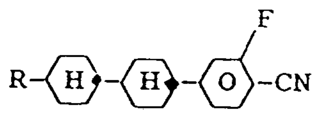

wherein R has the meaning given in claim 16.

**19.** An improved liquid crystal mixture according to claim 16, wherein the second liquid crystal material comprises at least one of liquid crystal compounds represented by the general formulae

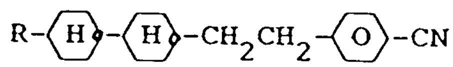

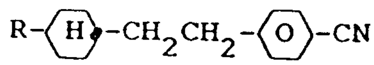

wherein R has the meaning given in claim 16.

**20.** An improved liquid crystal mixture according to claim 15, wherein said second liquid crystal material comprises one or more liquid crystal materials represented by general formula (II):

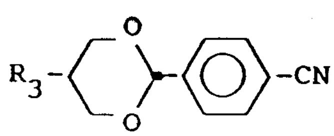 (II)

wherein $R_3$ represents a straight chain alkyl group having 1 to 12 carbon atoms, and said third liquid crystal material comprises liquid crystal compounds represented by general formulae:

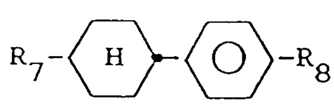 (VI)

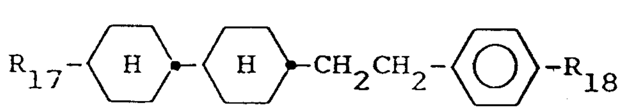 (XI)

wherein $R_7$, $R_{17}$ and $R_{18}$ independently represent a straight chain alkyl group having 1 to 12 carbon atoms, $R_8$ represents a straight chain alkyl group, a straight chain alkoxy group or a straight chain

alkanoyloxy group having 1 to 12 carbon atoms,
and comprises 5 to 25 wt% of liquid crystal compounds represented by general formula (VI), 20 to 35 wt% of liquid crystal compounds represented by general formula (XI).

**21.** An improved liquid crystal mixture according to claim 20, wherein said second liquid crystal material additionally comprises 2 to 10 wt% of liquid crystal compounds represented by general formula (IX):

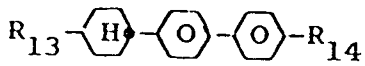
(IX)

wherein $R_{13}$ and $R_{14}$ independently represent a straight chain alkyl group having 1 to 12 carbon atoms.

**22.** An improved liquid crystal mixture according to claim 15, wherein said second liquid crystal material comprises one or mole liquid crystal compounds represented by the formula (II) below:

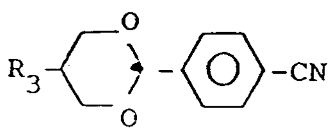
(II)

wherein $R_3$ represents a straight chain alkyl group having 1 to 12 carbon atoms, and said third liquid crystal material comprises 5 to 45 wt% of liquid crystal compounds represented by the formulae (VI) and (VII) below, and optionally 5 to 25 wt%, 10 to 25 wt%, and 20 to 25 wt%, respectively, of liquid crystal compounds represented by the formulae (IX), (X), and (XI) below:

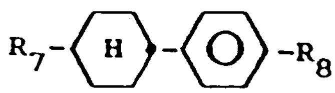
(VI)

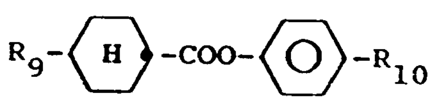
(VII)

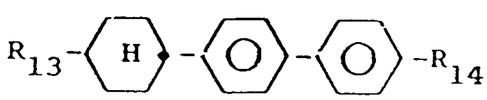
(IX)

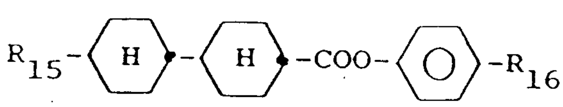
(X)

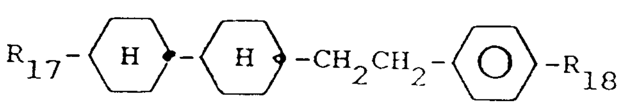
(XI)

wherein $R_7$, $R_9$ and $R_{13}$ to $R_{18}$ independently represent a straight chain alkyl group having 1 to 12 carbon atoms, $R_{10}$ represents a straight chain alkyl group or straight chain alkoxy group having 1 to 12 carbon atoms, and $R_8$ represents a straight chain alkyl group, a straight chain alkoxy group or a straight chain alkanoyloxy group having 1 to 12 carbon atoms.

**23.** An improved liquid crystal mixture according to claim 22, wherein said third liquid crystal material comprises 10 to 40 wt% of liquid crystal compounds represented by the formulae (VI) and (VII).

**24.** An improved liquid crystal mixture according to claim 15, wherein said second liquid crystal material comprises one or more liquid crystal compounds represented by the formula (II) below:

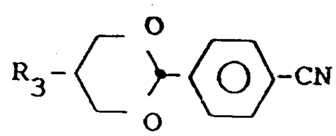

(II)

wherein $R_3$ represents a straight chain alkyl group having 1 to 12 carbon atoms, and said third liquid crystal material comprises 15 to 30 wt%, less than 10 wt%, and 20 to 40 wt%, respectively, of liquid crystal compounds represented by the formulae (VI), (IX), and (X) below, and optionally 5 to 45 wt% of liquid crystal compounds represented by the formula (VII) below:

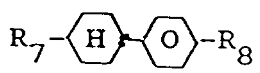

(VI)

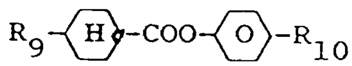

(VII)

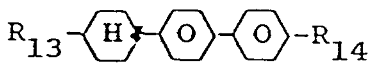

(IX)

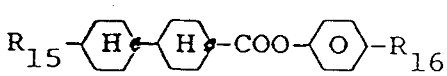

(X)

wherein $R_7$, $R_9$ and $R_{13}$ to $R_{16}$ independently represent a straight chain alkyl group having 1 to 12 carbon atoms, $R_{10}$ represents a straight chain alkyl group or straight chain alkoxy group having 1 to 12 carbon atoms, and $R_8$ represents a straight chain alkyl group, a straight chain alkoxy group or a straight chain alkanoyloxy group having 1 to 12 carbon atoms.

**25.** An improved liquid crystal mixture according to claim 24, wherein said third liquid crystal material comprises less than 42.6 wt% of liquid crystal compounds represented by the general formula (VII).

**26.** An improved liquid crystal mixture according to claim 1 , wherein said third liquid crystal material comprises one or more liquid crystal compounds represented by the formulae (XV) and (XVI) below:

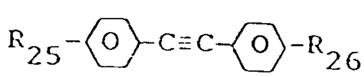

(XV)

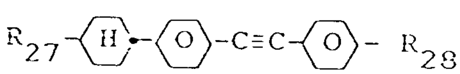

(XVI)

wherein $R_{25}$ and $R_{27}$ each represent R; and $R_{26}$ and $R_{28}$ each represent R or OR; R being in each case independently a straight chain alkyl group having up to 12 carbon atoms wherein one or two non-adjacent $CH_2$ groups may be replaced by -O- or -CH≡CH- two oxygen atoms not being directly attached to each other.

**27.** An improved liquid crystal mixture according to claim 26, which comprises 5 to 25 wt% of said compounds of formulae (XV) and (XVI).

**28.** A method of simultaneously minimizing the dependence of contrast of the angle of observation of an electrooptical display element based on a liquid crystal mixture and of maximizing its multiplexing capacity by maximizing its steepness of its characteristic curve, comprising operating the element in the first Gooch and Tarry transmission minimum, selecting a mixture having a $K_3/K_1$ ratio as small as possible but not more than 0.8 and a ratio of $\Delta\epsilon/\epsilon\perp$ of at most 0.5 which comprises

(a) at least 10 wt% of a first liquid crystal material comprising at least one of liquid crystal compounds represented by general formula:

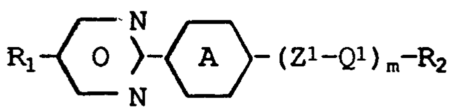

**(I)**

wherein $R_1$ represents a group R; and $R_2$ represents R or OR; R being in each case independently a straight chain alkyl group having up to 12 carbon atoms, wherein one or two non-adjacent $CH_2$ groups may be replaced by -O- and/or -CH=CH-, two oxygen atoms not being directly attached to each other,

A is 1,4-phenylene or trans-1,4-cyclohexylene,

$Z^1$ is -CO-O-, -O-CO-, $-CH_2-O-$, $-OCH_2-$, $-CH_2CH_2-$ or a single bond,

$Q^1$ is 1,4-phenylene or trans-1,4-cyclohexylene, and m is 0, 1 or 2,

(b) less than 10 wt% or a second liquid crystal material comprising one or more liquid crystal compounds having a distinct positive dielectric anisotropy ($\Delta\epsilon \geqq +3$); and,

(c) less than 90 wt% of a third liquid crystal material comprising at least one liquid crystal compound having a negative or substantially neutral dielectric anisotropy,

whereby the second liquid crystal material can be absent if the first and third liquid crystal material is selected in such a manner that the resulting mixture has a slightly positive $\Delta\epsilon$ and a $\Delta\epsilon/\epsilon\perp$ in the range of 0.04 to 0.3.

## Patentansprüche

**1.** Flüssigkristallmischung in einer verdrillt nematischen Flüssigkristall-Anzeigevorrichtung, die im Hochmultiplexverfahren betrieben wird und einen hohen Kontrast aufweist, wobei jene Mischung ein möglichst geringes Verhältnis der elastischen Konstanten $K_3/K_1$, das jedoch höchstens 0,8 beträgt, und ein $\Delta\epsilon/\epsilon\perp$-Verhältnis von höchstens 0,5 aufweist und

(a) mindestens 10 Gew.-% eines ersten Flüssigkristallmaterials aus mindestens einer der Flüssigkristallverbindungen gemäß der allgemeinen Formel:

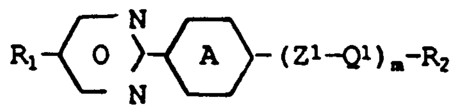

**(I)**

worin $R_1$ eine Gruppe R und $R_2$ R oder OR darstellen, wobei R jeweils unabhängig eine geradkettige Alkylgruppe mit bis zu 12 Kohlenstoffatomen bedeutet, worin eine oder zwei nichtbenachbarte $CH_2$-Gruppen durch -O- und/oder -CH=CH- ersetzt sein können, wobei zwei Sauerstoffatome nicht direkt miteinander verbunden sind,

A 1,4-Phenylen oder trans-1,4-Cyclohexylen,

$Z^1$-CO-O-, -O-CO-, $-CH_2-O-$, $-OCH_2-$, $-CH_2CH_2-$ oder eine Einfachbindung,

$Q^1$ 1,4-Phenylen oder trans-1,4-Cyclohexylen und m 0,1 oder 2 bedeuten,

(b) weniger als 10 Gew.-% eines zweiten Flüssigkristallmaterials aus einer oder mehreren Flüssigkristallverbindungen mit deutlich positiver dielektrischer Anisotropie ($\Delta\epsilon \geqq +3$) sowie

(c) weniger als' 90 Gew.-% eines dritten Flüssigkristallmaterials aus mindestens einer Flüssigkristallverbindung mit negativer oder im wesentlichen neutraler dielektrischer Anisotropie,

wobei auf das zweite Flüssigkristallmaterial verzichtet werden kann, falls das erste und dritte Flüssigkristallmaterial so gewählt werden, daß die entstehende Mischung ein leicht positives $\Delta\epsilon$ und ein $\Delta\epsilon/\epsilon\perp$ im Bereich von 0,04 bis 0,3 besitzt.

2. Verbesserte Flüssigkristallmischung nach Anspruch 1 in einer Vorrichtung, die im ersten Transmissionsminimum nach Gooch und Tarry betrieben wird.

3. Verbesserte Flüssigkristallmischung nach Anspruch 2 in einer Vorrichtung, dadurch gekennzeichnet, daß die elektrooptische Kennlinie mindestens genauso steil ist wie die Kennlinie im zweiten derartigen Transmissionsminimum.

4. Verbesserte Flüssigkristallmischung nach Anspruch 3 in einer Vorrichtung, dadurch gekennzeichnet, daß die Steilheit der Kennlinie im ersten Minimum größer ist als jene im zweiten Minimum.

5. Verbesserte Flüssigkristallmischung nach Anspruch 1 in einer Vorrichtung, dadurch gekennzeichnet, daß $K_3/K_1$ 0,4 bis 0,8 und $\Delta\epsilon/\epsilon_{\perp}$ 0,04 bis 0,3 betragen.

6. Verbesserte Flüssigkristallmischung nach Anspruch 1 in einer Vorrichtung, dadurch gekennzeichnet, daß $K_3/K_1$ 0,2 bis 0,75 und $\Delta\epsilon/\epsilon_{\perp}$ 0,1 bis 0,3 betragen.

7. Verbesserte Flüssigkristallmischung nach Anspruch 1, die mindestens 5 Komponenten enthält.

8. Verbesserte Flüssigkristallmischung nach Anspruch 1 in einer Vorrichtung, dadurch gekennzeichnet, daß $K_3/K_1$ 0,2 bis 0,75 und $\Delta\epsilon/\epsilon_{\perp}$ 0,1 bis 0,3 betragen.

9. Verbesserte Flüssigkristallmischung nach Anspruch 1, dadurch gekennzeichnet, daß das erste Flüssigkristallmaterial mindestens eine der Flüssigkristallverbindungen entsprechend der allgemeinen Formel Ia enthält,

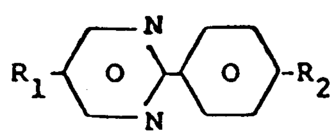

worin $R_1$ und $R_2$ die in Anspruch 1 angegebene Bedeutung besitzen.

10. Verbesserte Flüssigkristallmischung nach Anspruch 1, dadurch gekennzeichnet, daß das zweite Flüssigkristallmaterial mindestens eine der Flüssigkristallverbindungen entsprechend der allgemeinen Formeln II bis V enthält:

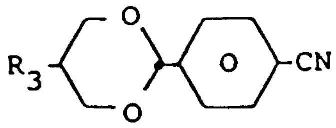

II

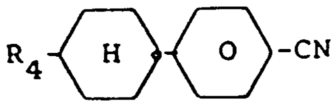

III

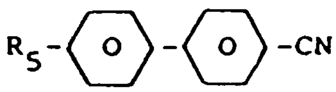

IV

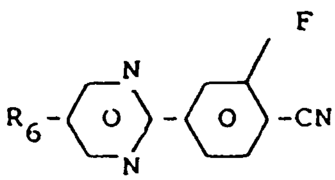

V

worin $R_3$, $R_4$, $R_5$ und $R_6$ unabhängig eine geradkettige Alkylgruppe mit bis zu 12 Kohlenstoffatomen darstellen, worin eine oder zwei nichtbenachbarte $CH_2$-Gruppen durch -O- oder -CH=CH- ersetzt sein können, wobei zwei Sauerstoffatome nicht direkt miteinander verbunden sind.

**11.** Verbesserte Flüssigkristallmischung nach Anspruch 1, dadurch gekennzeichnet, daß das dritte Flüssigkristallmaterial Flüssigkristallverbindungen mit einer dielektrischen Anisotropie von -1 bis +1 enthält.

**12.** Verbesserte Flüssigkristallmischung nach Anspruch 1, dadurch gekennzeichnet, daß das dritte Flüssigkristallmaterial mindestens eine der Flüssigkristallverbindungen entsprechend der allgemeinen Formeln VI bis VIII enthält:

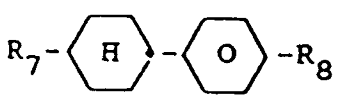

VI

worin $R_7$ R und $R_8$ R oder OR,

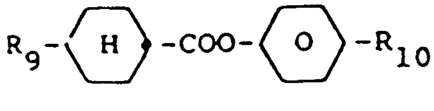

VII

worin $R_9$ R; und $R_{10}$ R oder OR,

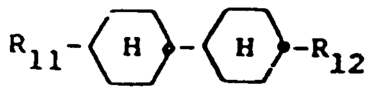 VIII

worin $R_{11}$ R und $R_{12}$ R oder OR darstellen, wobei R jeweils unabhängig eine geradkettige Alkylgruppe mit bis zu 12 Kohlenstoffatomen bedeutet, worin eine oder zwei nichtbenachbarte $CH_2$-Gruppen durch -O- oder -CH=CH-ersetzt sein können, wobei zwei Sauerstoffatome nicht direkt miteinander verbunden sind.

**13.** Verbesserte Flüssigkristallmischung nach Anspruch 1, dadurch gekennzeichnet, daß das dritte Flüssigkristallmaterial weiterhin mindestens eine der Flüssigkristallverbindungen entsprechend der allgemeinen Formeln IX bis XIV enthält:

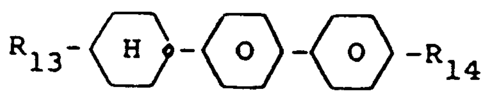 IX

worin $R_{13}$ und $R_{14}$ unabhängig voneinander R,

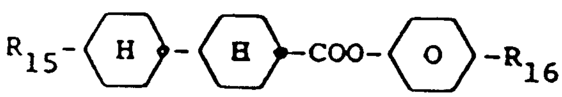 X

worin $R_{15}$ und $R_{16}$ unabhängig voneinander R,

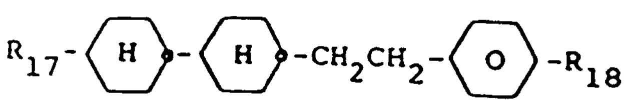 XI

worin $R_{17}$ und $R_{18}$ unabhängig voneinander R,

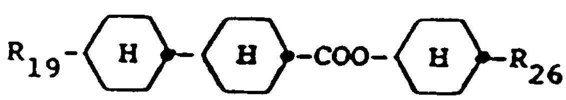 XII

worin $R_{19}$ und $R_{20}$ unabhängig voneinander R,

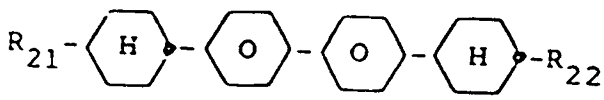 XIII

worin $R_{21}$ und $R_{22}$ unabhängig voneinander R,

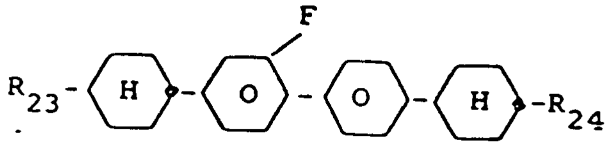

XIV

worin $R_{23}$ und $R_{24}$ unabhängig voneinander R darstellen;
wobei R jeweils unabhängig eine geradkettige Alkylgruppe mit bis zu 12 Kohlenstoffatomen bedeutet, worin eine oder zwei nichtbenachbarte $CH_2$-Gruppen durch -O- oder -CH=CH-ersetzt sein können, wobei zwei Sauerstoffatome nicht direkt miteinander verbunden sind.

**14.** Verbesserte Flüssigkristallmischung nach Anspruch 1, dadurch gekennzeichnet, daß jenes erste Flüssigkristallmaterial, jenes zweite Flüssigkristallmaterial und jenes dritte Flüssigkristallmaterial in der Formulierung in Anteilen von mindestens 30 Gew.-% bzw. weniger als 10 Gew.-% bzw. weniger als 70 Gew.-% vorhanden sind.

**15.** Verbesserte Flüssigkristallmischung nach Anspruch 1, dadurch gekennzeichnet, daß jenes erste Flüssigkristallmaterial, jenes zweite Flüssigkristallmaterial und jenes dritte Flüssigkristallmaterial in der Formulierung in Anteilen von 30 bis 65 Gew.-% bzw. weniger als 5 Gew.-% bzw. 35 bis 70 Gew.-% vorhanden sind.

**16.** Verbesserte Flüssigkristallmischung nach Anspruch 1, dadurch gekennzeichnet, daß das zweite Flüssigkristallmaterial mindestens eine der Flüssigkristallverbindungen entsprechend der allgemeinen Formeln IIf bis IIh enthält:

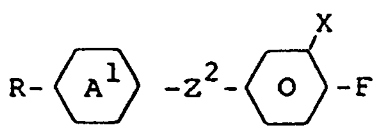

IIf

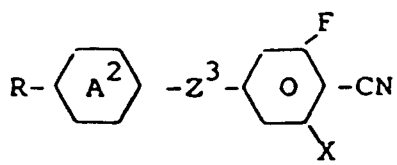

IIg

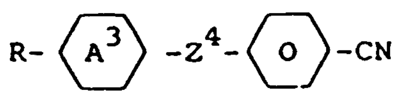

IIh

worin
$A^1$

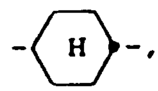, 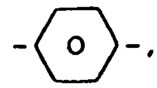, 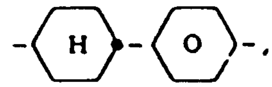,

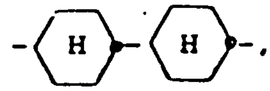, 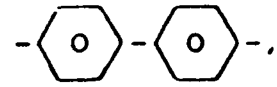,

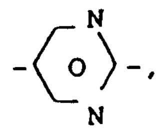, 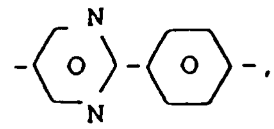, 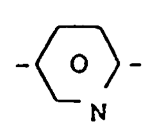

oder

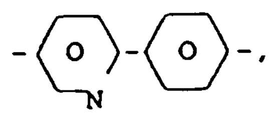,

| | |
|---|---|
| $Z_2$ | -CO-O-, -O-CO-, $-CH_2CH_2-$ oder eine Einfachbindung, |
| X | Wasserstoff oder Fluor, |
| $A^2$ und $A^3$ | jeweils |

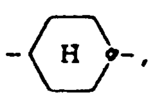, 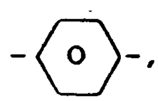,

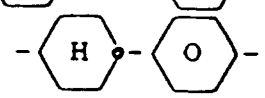, 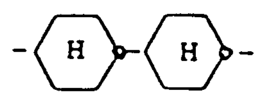

oder

| | |
|---|---|
| $Z^3$ | -CO-O-, -O-CO-, $-CH_2O-$, $-CH_2CH_2-$ oder eine Einfachbindung, |
| $Z^4$ | -CO-O-, -O-CO- oder $CH_2CH_2-$ bedeuten, |

wobei R jeweils unabhängig eine geradkettige Alkylgruppe mit bis zu 12 Kohlenstoffatomen bedeutet, worin eine oder zwei nichtbenachbarte $CH_2$-Gruppen durch -O- oder -CH=CH-ersetzt sein können, wobei zwei Sauerstoffatome nicht direkt miteinander verbunden sind.

**17.** Verbesserte Flüssigkristallmischung nach Anspruch 16, dadurch gekennzeichnet, daß das zweite Flüssigkristallmaterial mindestens eine der Flüssigkristallverbindungen entsprechend der allgemeinen Formel

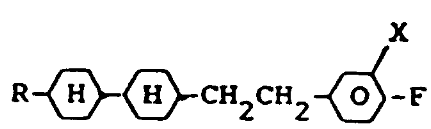

enthält, worin R und X die in Anspruch 16 angegebene Bedeutung besitzen.

**18.** Verbesserte Flüssigkristallmischung nach Anspruch 16, dadurch gekennzeichnet, daß das zweite Flüssigkristallmaterial mindestens eine der Flüssigkristallverbindungen entsprechend der allgemeinen Formeln

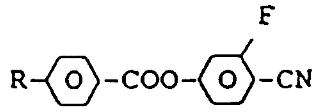

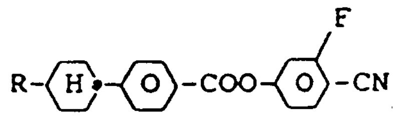

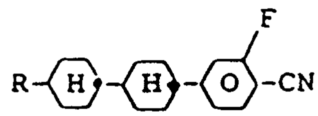

enthält, worin R die in Anspruch 16 angegebene Bedeutung besitzt.

**19.** Verbesserte Flüssigkristallmischung nach Anspruch 16, dadurch gekennzeichnet, daß das zweite Flüssigkristallmaterial mindestens eine der Flüssigkristallverbindungen entsprechend der allgemeinen Formeln

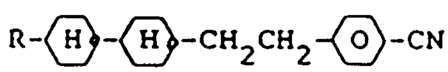

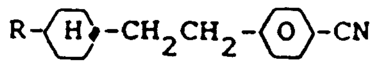

enthält, worin R die in Anspruch 16 angegebene Bedeutung besitzt.

**20.** Verbesserte Flüssigkristallmischung nach Anspruch 15, dadurch gekennzeichnet, daß jenes zweite Flüssigkristallmaterial eine oder mehrere Flüssigkristallmaterialien entsprechend der allgemeinen Formel (II):

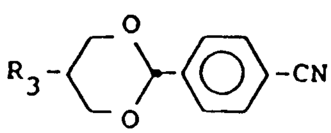 (II)

worin $R_3$ eine geradkettige Alkylgruppe mit 1 bis 12 Kohlenstoffatomen darstellt, und jenes dritte Flüssigkristallmaterial Flüssigkristallverbindungen entsprechend der allgemeinen Formeln:

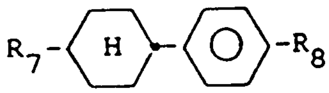 (VI)

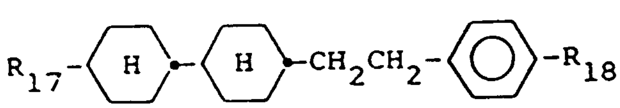 (XI)

worin $R_7$, $R_{17}$ und $R_{18}$ unabhängig eine geradkettige Alkylgruppe mit 1 bis 12 Kohlenstoffatomen, $R_8$ eine geradkettige Alkylgruppe, eine geradkettige Alkoxygruppe oder eine geradkettige Alkanoyloxygruppe mit 1 bis 12 Kohlenstoffatomen darstellen,
und 5 bis 25 Gew.-% an Flüssigkristallverbindungen entsprechend der allgemeinen Formel (VI), 20 bis 35 Gew.-% an Flüssigkristallverbindungen entsprechend der allgemeinen Formel (XI) enthalten.

**21.** Verbesserte Flüssigkristallmischung nach Anspruch 20, dadurch gekennzeichnet, daß jenes zweite Flüssigkristallmaterial zusätzlich 2 bis 10 Gew.-% an Flüssigkristallverbindungen entsprechend der allgemeinen Formel (IX) enthält:

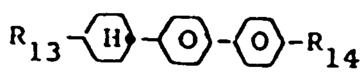

(IX)

worin $R_{13}$ und $R_{14}$ unabhängig eine geradkettige Alkylgruppe mit 1 bis 12 Kohlenstoffatomen darstellen.

**22.** Verbesserte Flüssigkristallmischung nach Anspruch 15, dadurch gekennzeichnet, daß jenes zweite Flüssigkristallmaterial eine oder mehrere Flüssigkristallverbindungen entsprechend der nachfolgenden Formel (II):

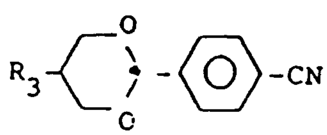

(II)

worin $R_3$ eine geradkettige Alkylgruppe mit 1 bis 12 Kohlenstoffatomen darstellt, und jenes dritte Flüssigkristallmaterial 5 bis 45 Gew.-% an Flüssigkristallverbindungen entsprechend nachfolgenden Formeln (VI) und (VII) und gegebenenfalls 5 bis 25 Gew.-% bzw. 10 bis 25 Gew.-% bzw. 20 bis 25 Gew.-% an Flüssigkristallverbindungen entsprechend der nachfolgenden Formeln (IX), (X) und (XI) enthalten:

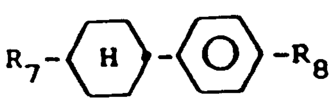

(VI)

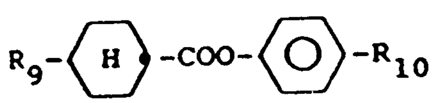

(VII)

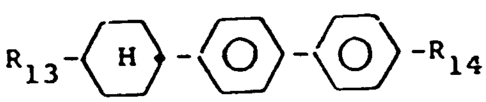

(IX)

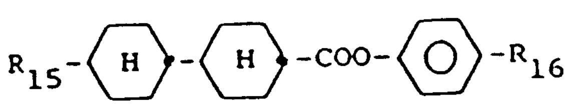

(X)

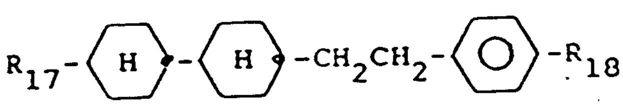

(XI)

worin $R_7$, $R_9$ und $R_{13}$ bis $R_{18}$ unabhängig eine geradkettige Alkylgruppe mit 1 bis 12 Kohlenstoffatomen, $R_{10}$ eine geradkettige Alkylgruppe oder eine geradkettige Alkoxygruppe mit 1 bis 12 Kohlenstoffatomen und $R_8$ eine geradkettige Alkylgruppe, eine geradkettige Alkoxygruppe oder eine geradkettige Alkanoyloxygruppe mit 1 bis 12 Kohlenstoffatomen darstellen.

**23.** Verbesserte Flüssigkristallmischung nach Anspruch 22, dadurch gekennzeichnet, daß jenes dritte Flüssigkristallmaterial 10 bis 40 Gew.-% an Flüssigkristallverbindungen entsprechend der Formeln (VI) und (VII) enthält.

**24.** Verbesserte Flüssigkristallmischung nach Anspruch 15, dadurch gekennzeichnet, daß jenes zweite Flüssigkristallmaterial eine oder mehrere Flüssigkristallverbindungen entsprechend der nachfolgenden Formel (II):

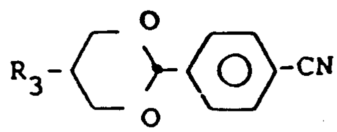 (II)

worin $R_3$ eine geradkettige Alkylgruppe mit 1 bis 12 Kohlenstoffatomen darstellt, und jenes dritte Flüssigkristallmaterial 15 bis 30 Gew.-% bzw. weniger als 10 Gew.-% bzw. 20 bis 40 Gew.-% an Flüssigkristallverbindungen entsprechend der nachfolgenden Formeln (VI), (IX) und (X) und gegebenenfalls 5 bis 45 Gew.-% an Flüssigkristallverbindungen entsprechend der nachfolgenden Formel (VII) enthalten:

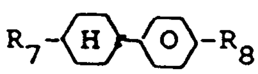 (VI)

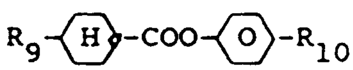 (VII)

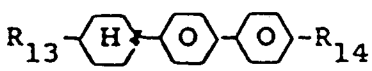 (IX)

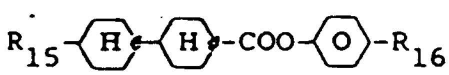 (X)

worin $R_7$, $R_9$ und $R_{13}$ bis $R_{16}$ unabhängig eine geradkettige Alkylgruppe mit 1 bis 12 Kohlenstoffatomen, $R_{10}$ eine geradkettige Alkylgruppe oder eine geradkettige Alkoxygruppe mit 1 bis 12 Kohlenstoffatomen und $R_8$ eine geradkettige Alkylgruppe, eine geradkettige Alkoxygruppe oder eine geradkettige Alkanoyloxygruppe mit 1 bis 12 Kohlenstoffatomen darstellen.

**25.** Verbesserte Flüssigkristallmischung nach Anspruch 24, dadurch gekennzeichnet, daß jenes dritte Flüssigkristallmaterial weniger als 42,6 Gew.-% an Flüssigkristallverbindungen entsprechend der allgemeinen Formel (VII) enthält.

**26.** Verbesserte Flüssigkristallmischung nach Anspruch 1, dadurch gekennzeichnet, daß jenes dritte Flüssigkristallmaterial eine oder mehrere Flüssigkristallverbindungen entsprechend der nachfolgenden Formeln (XV) und (XVI) enthält:

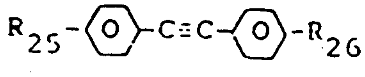

(XV)

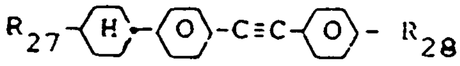

(XVI)

worin $R_{25}$ und $R_{27}$ jeweils R und $R_{26}$ und $R_{28}$ jeweils R oder OR darstellen, wobei R jeweils unabhängig eine geradkettige Alkylgruppe mit bis zu 12 Kohlenstoffatomen bedeutet, worin eine oder zwei nichtbenachbarte $CH_2$-Gruppen durch -O- oder -CH=CH- ersetzt sein können, wobei zwei Sauerstoffatome nicht direkt miteinander verbunden sind.

**27.** Verbesserte Flüssigkristallmischung nach Anspruch 26, dadurch gekennzeichnet, daß sie 5 bis 25 Gew.-% jener Verbindungen der Formeln (XV) und (XVI) enthält.

**28.** Verfahren zur gleichzeitigen Minimierung der Abhängigkeit des Kontrastes vom Beobachtungswinkel eines elektrooptischen Anzeigeelements auf der Basis einer Flüssigkristallmischung und zur Maximierung von dessen Multiplexierfähigkeit durch Maximierung der Steilheit seiner Kennlinie, dadurch gekennzeichnet, daß das Element im ersten Transmissionsminimum nach Gooch und Tarry betrieben wird, und eine Mischung mit möglichst kleinem $K_3/K_1$-Verhältnis, das jedoch nicht mehr als 0,8 beträgt, und ein $\Delta\epsilon/\epsilon_\perp$-Verhältnis von mindestens 0,5 gewählt wird, die

(a) mindestens 10 Gew.-% eines ersten Flüssigkristallmaterials aus mindestens einer der Flüssigkristallverbindungen gemäß der allgemeinen Formel:

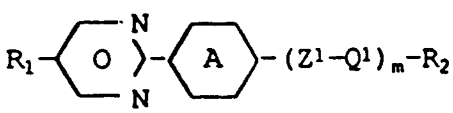

(I)

worin $R_1$ eine Gruppe R und $R_2$ R oder OR darstellen, wobei R jeweils unabhängig eine geradkettige Alkylgruppe mit bis zu 12 Kohlenstoffatomen bedeutet, worin eine oder zwei nichtbenachbarte $CH_2$-Gruppen durch -O- und/oder -CH=CH- ersetzt sein können, wobei zwei Sauerstoffatome nicht direkt miteinander verbunden sind,

A 1,4-Phenylen oder trans-1,4-Cyclohexylen,

$Z^1$ -CO-O-, -O-CO-, $-CH_2-O-$, $-OCH_2-$, $-CH_2CH_2-$ oder eine Einfachbindung,

$Q^1$ 1,4-Phenylen oder trans-1,4-Cyclohexylen und m 0,1 oder 2 bedeuten,

(b) weniger als 10 Gew.-% eines zweiten Flüssigkristallmaterials aus einer oder mehreren Flüssigkristallverbindungen mit deutlich positiver dielektrischer Anisotropie ($\Delta\epsilon \geqq +3$) sowie

(c) weniger als 90 Gew.-% eines dritten Flüssigkristallmaterials aus mindestens einer Flüssigkristallverbindung mit negativer oder im wesentlichen neutraler dielektrischer Anisotropie enthält,

wobei auf das zweite Flüssigkristallmaterial verzichtet werden kann, falls das erste und dritte Flüssigkristallmaterial so gewählt werden, daß die entstehende Mischung ein leicht positives $\Delta\epsilon$ und ein $\Delta\epsilon/\epsilon_\perp$ im Bereich von 0,04 bis 0,3 besitzt.

## Revendications

**1.** Un mélange de cristaux liquides dans un dispositif d'affichage à cristaux liquides nématiques à torsion, fonctionnant dans le mode multiplex élevé et présentant un contraste élevé, ledit mélange ayant un rapport entre les constantes élastiques $K_3/K_1$ aussi petit que possible mais ne dépassant pas 0,8 et un rapport $\Delta\epsilon/\epsilon_\perp$ d'au maximum 0,5 et comporte:

(a) au moins 10% en poids d'un premier matériau à cristaux liquides comportant au moins un des composés à cristaux liquides représenté par la formule générale:

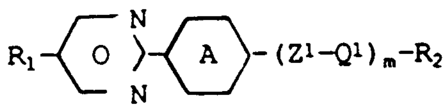

(I)

dans laquelle $R_1$ représente un groupe R; $R_2$ représente R ou OR; R étant dans chaque cas indépendamment un groupe alkyle à chaîne droite, possédant jusqu'à 12 atomes de carbone, dans lequel un ou deux parmi les groupes non-adjacents $CH_2$ peuvent être remplacés par -O- et/ou -CH = CH-, deux atomes d'oxygène n'étant pas directement liés l'un à l'autre,
A est du 1,4-phénylène ou du trans-1,4-cyclohexylène,
$Z^1$ est -CO-O-, -O-CO-, $-CH_2-O-$, $-OCH_2-$, $-CH_2CH_2-$ ou bien une simple liaison,
$Q^1$ est du 1,4-phénylène ou du trans-1,4-cyclohexylène, et m est 0, 1 ou 2.
(b) moins de 10% en poids d'un second matériau à cristaux liquides comportant un ou plus d'un composé à cristaux liquides présentant une anisotropie diélectrique positive distincte ($\Delta\epsilon \geqq +3$); et
(c) moins de 90% en poids d'un troisième matériau à cristaux liquides comportant au moins un composé à cristaux liquides possédant une anisotropie diélectrique négative ou pratiquement neutre,
le second matériau à cristaux liquides pouvant être omis si le premier et le troisième matériaux à cristaux liquides sont choisis d'une manière telle que le mélange résultant présente un $\Delta\epsilon$ légèrement positif et un $\Delta\epsilon/\epsilon_\perp$ dans la gamme de 0,04 à 0,3.

**2.** Un mélange de cristaux liquides, amélioré selon la revendication 1 dans un dispositif fonctionnant dans le premier minimum de transmission de Gooch et Tarry.

**3.** Un mélange de cristaux liquides, amélioré, selon la revendication 1 dans un dispositif, dans lequel la courbe de caractéristiques électro-optique est au moins aussi pentue que la courbe dans le second minimum de transmission de ce type.

**4.** Un mélange de cristaux liquides, amélioré, selon la revendication 3 dans un dispositif, dans lequel la raideur de pente de la courbe caractéristique dans le premier minimum est plus importante que celle dans le second minimum.

**5.** Un mélange de cristaux liquides, amélioré, selon la revendication 1, dans un dispositif, dans lequel le rapport $K_3/K_1$ est de 0,4 à 0,8 et le rapport $\Delta\epsilon/\epsilon_\perp$ est de 0,04 à 0,3.

**6.** Un mélange de cristaux liquides, amélioré, selon la revendication 1 dans un dispositif, dans lequel le rapport $K_3/K_1$ est de 0,2 à 0,75 et le rapport $\Delta\epsilon/\epsilon_\perp$ est de 0,1 à 0,3.

**7.** Un mélange de cristaux liquides, amélioré, selon la revendication 1, qui comporte au moins cinq composants.

**8.** Un mélange de cristaux liquides, amélioré, selon la revendication 1 dans un dispositif, dans lequel $K_3/K_1$ est de 0,2 à 0,75 et $\Delta\epsilon/\epsilon_\perp$ est de 0,1 à 0,3.

**9.** Un mélange de cristaux liquides, amélioré, selon la revendication 1, dans lequel le premier matériau à cristaux liquides comporte au moins un des composés à cristaux liquides, représenté par la formule générale Ia

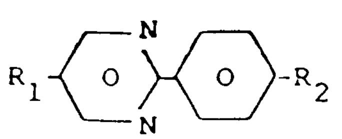

Ia

dans laquelle $R_1$ et $R_2$ ont la signification spécifiée dans la revendication 1.

**10.** Un mélange de cristaux liquides, amélioré selon la revendication 1, dans lequel le second matériau à cristaux liquides comporte au moins un des composés à cristaux liquides représentés par les formules générales II à V:

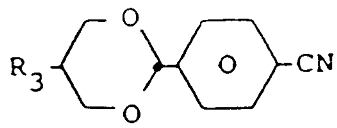

II

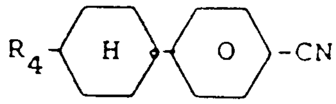

III

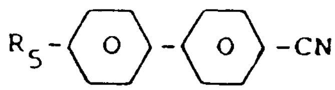

IV

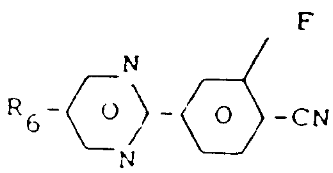

V

dans lesquels $R_3$, $R_4$, $R_5$ et $R_6$ représentent indépendamment un groupe alkyle à chaîne droite, possédant jusqu'à 12 atomes de carbone, dans lequel un ou deux groupes $CH_2$, non adjacents, peuvent être remplacés par -O- ou -CH=CH-, deux atomes d'oxygène n'étant pas directement fixés l'un à l'autre.

**11.** Un mélange à cristaux liquides, amélioré, selon la revendication 1, dans lequel le troisième matériau à cristaux liquides comporte des composés à cristaux liquides présentant une anisotropie diélectrique de -1 à +1.

**12.** Un mélange à cristaux liquides, amélioré, selon la revendication 1, dans lequel le troisième matériau à cristaux liquides comporte au moins un des composés à cristaux liquides représenté par les formules générales VI à VIII;

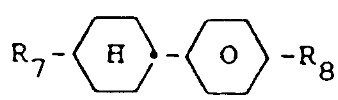

VI

dans laquelle $R_7$ représente R; et $R_8$ représente R ou OR,

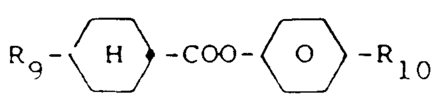

VII

dans laquelle $R_9$ représente R; et $R_{10}$ représente R ou OR,

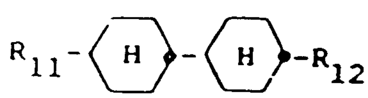

VIII

dans laquelle $R_{11}$ représente R; et $R_{12}$ représente R ou OR;
R étant, dans chaque cas, indépendamment un groupe alkyle à chaîne droite, possédant jusqu'à 12 atomes de carbone dans lequel un ou deux groupes $CH_2$ non adjacents peuvent être remplacés par -O- ou -CH = CH-, deux atomes d'oxygène n'étant pas directement fixés l'un à l'autre.

**13.** Un mélange de cristaux liquides selon la revendication 1, dans lequel le troisième matériau à cristaux liquides comporte en outre au moins un des composés à cristaux liquides représenté par les formules générales IX à XIV:

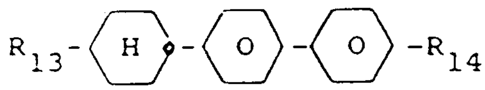

IX

dans laquelle $R_{13}$ et $R_{14}$ représentent, indépendamment l'un de l'autre, R;

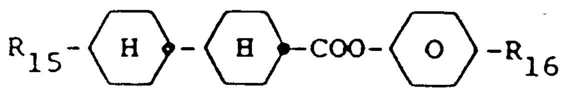

X

dans laquelle $R_{15}$ et $R_{16}$ représentent, indépendamment l'un de l'autre, R;

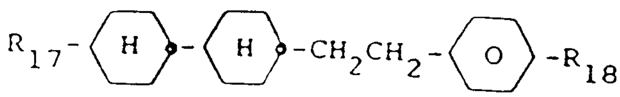

XI

dans laquelle $R_{17}$ et $R_{18}$ représentent, indépendamment l'un de l'autre, R;

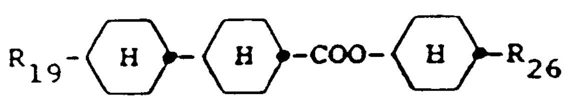

XII

dans laquelle $R_{19}$ et $R_{20}$ représentent, indépendamment l'un de l'autre, R;

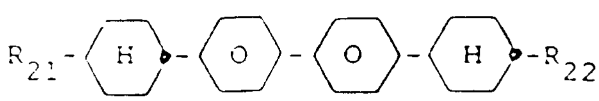

XIII

dans laquelle $R_{21}$ et $R_{22}$ représentent, indépendamment l'un de l'autre, R;

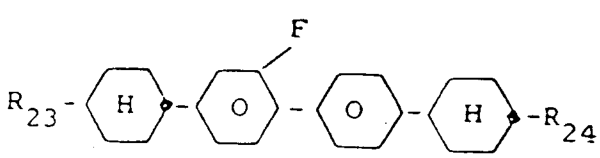

XIV

dans laquelle $R_{23}$ et $R_{24}$ représentent, indépendamment l'un de l'autre, R;
R étant, dans chaque cas, indépendamment un groupe alkyle à chaîne droite, possédant jusqu'à 12 atomes de carbone, dans lequel un ou deux groupes $CH_2$ non adjacents peuvent être remplacés par -O- ou -CH = CH-, deux atomes d'oxygène n'étant pas directement fixés l'un à l'autre.

**14.** Un mélange de cristaux liquides, amélioré, selon la revendication 1, dans lequel les rapports de formulation entre ledit premier matériau à cristaux liquides, ledit second matériau à cristaux liquides et ledit troisième matériau à cristaux liquides sont d'au moins 30% en poids, inférieur à 10% en poids et inférieur à 70% en poids, respectivement.

**15.** Un mélange de cristaux liquides, amélioré, selon la revendication 1, dans lequel les rapports de formulation entre ledit premier matériau à cristaux liquides, ledit second matériau à cristaux liquides et ledit troisième matériau liquide sont de 30 à 65% en poids, inférieurs à 5% en poids et de 35 à 70% en poids, respectivement.

**16.** Un mélange de cristaux liquides, amélioré, selon la revendication 1, dans lequel le second matériau à cristaux liquides comporte au moins un des composés à cristaux liquides représenté par les formules générales de IIf à IIh:

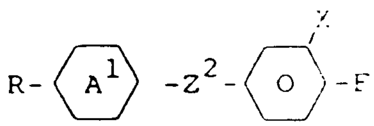

IIf

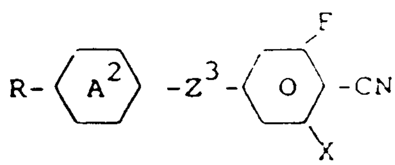

IIg

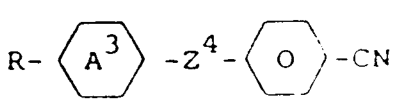

IIh

dans lesquels
$A^1$ est

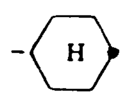, 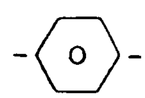, 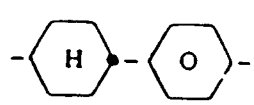,

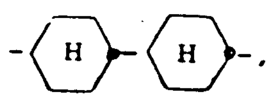, 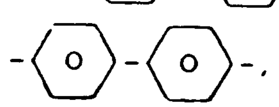,

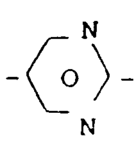, 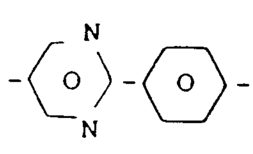, 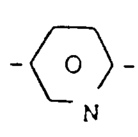

ou 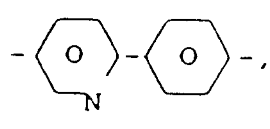,

$Z^2$ est -CO-O-, -O-CO-, $-CH_2CH_2-$ ou une simple liaison.
X est de l'hydrogène ou du fluor,
$A^2$ et $A^3$ représentent dans chaque cas

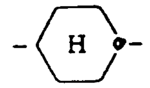, 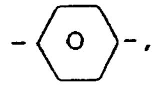,

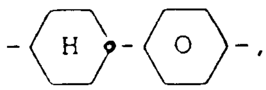, 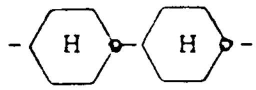 ou

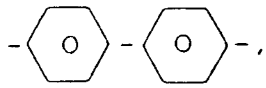,

$Z^3$ est -CO-O-, -O-CO-, -$CH_2$O-, -$CH_2CH_2$- ou une simple liaison,
$Z^4$ est -CO-O-, -O-CO- ou -$CH_2CH_2$-, et
R étant, dans chaque cas, indépendamment un groupe alkyle à chaîne droite possédant jusqu'à 12 atomes de carbone, dans lequel un ou deux groupes $CH_2$ non adjacents peuvent être remplacés par -O- ou -CH=CH-, deux atomes d'oxygène n'étant pas directement fixés l'un à l'autre.

**17.** Un mélange de cristaux liquides, amélioré, selon la revendication 16, dans lequel le second matériau à cristaux liquides comporte au moins un des composés à cristaux liquides représenté par la formule générale

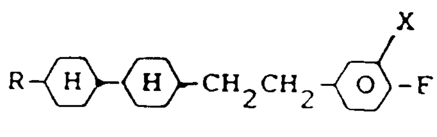

dans laquelle R et X ont la signification spécifiée dans la revendication 16.

**18.** Un mélange de cristaux liquides, amélioré, selon la revendication 16, dans lequel le second matériau à cristaux liquides comporte au moins un des composés à cristaux liquides représenté par les formules générales

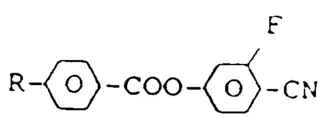

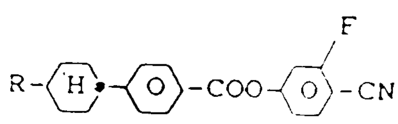

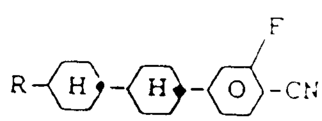

dans lesquels R a la signification spécifiée dans la revendication 16.

**19.** Un mélange de cristaux liquides, amélioré, selon la revendication 16, dans lequel le second matériau a cristaux liquides comporte au moins un des composés à cristaux liquides représenté par les formules

générales

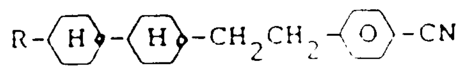

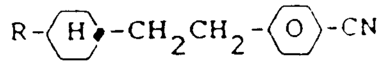

dans laquelle R a la signification spécifiée dans la revendication 16.

**20.** Un mélange de cristaux liquides, amélioré, selon la revendication 15, dans lequel ledit matériau à cristaux liquides comporte un ou plus d'un matériau à cristaux liquides représenté par la formule générale (II):

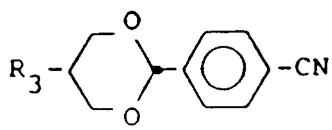

(II)

dans laquelle $R_3$ représente un groupe alkyle à chaîne droite ayant de 1 à 12 atomes de carbone et ledit troisième matériau à cristaux liquides comporte des composés à cristaux liquides représenté par les formules générales:

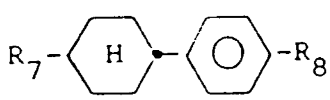

(VI)

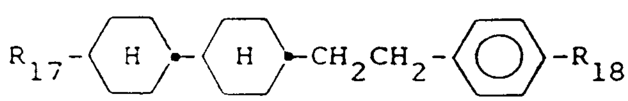

(XI)

dans lesquelles $R_7$, $R_{17}$ et $R_{18}$ représententindépendamment un groupe alkyle à chaîne droite présentant de 1 à 12 atomes de carbone, $R_8$ représente un groupe alkyle à chaîne droite, un groupe alkoxy à chaîne droite et un groupe alkanoyloxy à chaîne droite possédant de 1 à 12 atomes de carbone et comporte de 5 à 25% en poids de composés à cristaux liquides représentés par la formule générale (VI), de 20 à 35% en poids de composés à cristaux liquides représentés par la formule générale (XI).

**21.** Un mélange à cristaux liquides, amélioré, selon la revendication 20, dans lequel ledit second matériau à cristaux liquides comporte en outre de 2 à 10% en poids des composés à cristaux liquides représentés par la formule générale (IX):

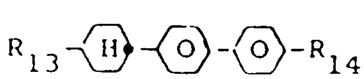

(IX)

dans laquelle $R_{13}$ et $R_{14}$ représentent indépendamment un groupe alkyle à chaîne droite, présentant de 1 à 12 atomes de carbone.

**22.** Un mélange de cristaux liquides, amélioré, selon la revendication 15, dans lequel ledit second matériau à cristaux liquides comporte un ou plus d'un composé à cristaux liquides représenté par la formule (II) ci-dessous:

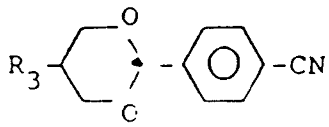

(II)

dans laquelle $R_3$ représente un groupe alkyle à chaîne droite présentant de 1 à 12 atomes de carbone, et ledit troisième matériau à cristaux liquides comporte de 5 à 45% en poids de composés à cristaux liquides représentés par les formules (VI) et (VII) ci-dessous, et facultativement de 5 à 25% en poids, de 10 à 25% en poids et de 20 à 25% en poids, respectivement, des composés à cristaux liquides représentés par les formules (IX), (X) et (XI) ci-dessous:

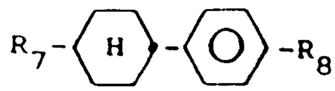

(VI)

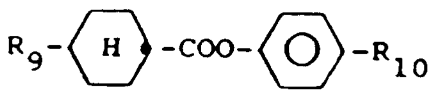

(VII)

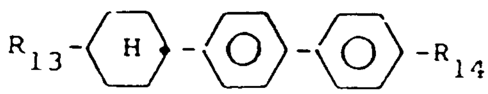

(IX)

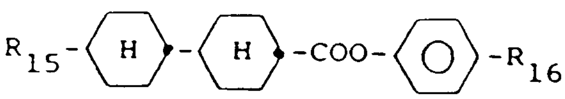

(X)

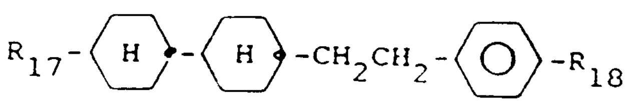

(XI)

dans laquelle $R_7$, $R_9$ et $R_{13}$ à $R_{18}$ représentent indépendamment un groupe alkyle à chaîne droite présentant de 1 à 12 atomes de carbone, $R_{10}$ représente un groupe alkyle à chaîne droite ou un groupe alkoxy à chaîne droite représentant de 1 à 12 atomes de carbone et $R_8$ représente un groupe alkyle à chaîne droite, un groupe alkoxy à chaîne droite ou un groupe alkanoyloxy à chaîne droite présentant de 1 à 12 atomes de carbone.

**23.** Un mélange à cristaux liquides, amélioré, selon la revendication 22, dans lequel ledit troisième matériau à cristaux liquides comporte de 10 à 40% en poids de composés à cristaux liquides représentés par les formules (VI) et (VII).

**24.** Un mélange de cristaux liquides, amélioré, selon la revendication 15, dans lequel ledit second matériau à cristaux liquides comporte un ou plus d'un composé à cristaux liquides représenté par la formule (II) ci-dessous:

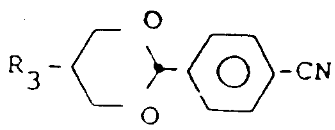

(II)

dans laquelle $R_3$ représente un groupe alkyle à chaîne droite présentant de 1 à 12 atomes de carbone, et ledit troisième matériau à cristaux liquides comporte de 15 à 30% en poids, moins de 10% en poids et de 20 à 40% en poids, respectivement, de composés à cristaux liquides représentés par les formules (VI), (IX) et (X) ci-dessous, et facultativement de 5 à 45% en poids de composés à cristaux liquides représentés par la formule (VII) ci-dessous:

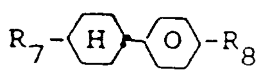

(VI)

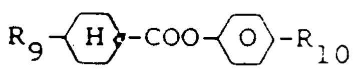

(VII)

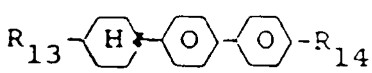

(IX)

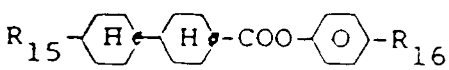

(X)

dans lesquels $R_7$, $R_9$ et $R_{13}$ à $R_{16}$ représentent indépendamment un groupe alkyle à chaîne droite représentant de 1 à 12 atomes de carbone, $R_{10}$ représente un groupe alkyle à chaîne droite ou un groupe alkoxy à chaîne droite représentant de 1 à 12 atomes de carbone, et $R_8$ représente un groupe alkyle à chaîne droite, un groupe alkoxy à chaîne droite ou un groupe alkanoyloxy à chaîne droite présentant de 1 à 12 atomes de carbone.

**25.** Un mélange de cristaux liquides, amélioré, selon la revendication 24, dans lequel ledit troisième matériau à cristaux liquides comporte moins de 42,6% en poids de composés à cristaux liquides représentés par la formule générale (VII).

**26.** Un mélange de cristaux liquides, amélioré, selon la revendication 1, dans lequel ledit troisième matériau à cristaux liquides comportant un ou plus d'un composé à cristaux liquides représenté par les formules (XV) et (XVI) ci-dessous:

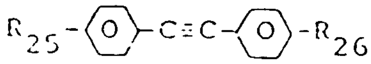

(XV)

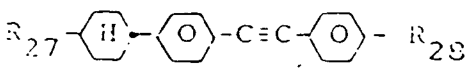

(XVI)

dans lesquels $R_{25}$ et $R_{27}$ représentent chacun R; et $R_{26}$ et $R_{28}$ représentent chacun R ou OR; R étant, dans chaque cas, indépendamment un groupe alkyle à chaîne droite représentant jusqu'à 12 atomes de carbone, dans lequel un ou deux groupes $CH_2$ non adjacents peuvent être remplacés par -O- ou -CH=CH-, deux atomes d'oxygène n'étant pas directement fixés l'un à l'autre.

**27.** Un mélange à cristaux liquides, amélioré, selon la revendication 26, qui comporte de 5 à 25% en poids desdits composés de formules (XV) et (XVI).

**28.** Une méthode pour réduire simultanément au minimum la dépendance de contraste de l'angle d'observation d'un élément d'affichage électro-optique à base d'un mélange de cristaux liquides et pour amener au maximum sa capacité de multiplexage en rendant maximale la raideur de pente de sa courbe caractéristique, consistant à faire fonctionner l'élément dans le premier minimum de transmission de Gooch et Tarry, à choisir un mélange présentant un rapport $K_3/K_1$ aussi faible que possible mais ne pas supérieur à 0,8 et un rapport de $\Delta\epsilon/\epsilon_\perp$ d'au plus 0,5, qui comporte:

(a) au moins 10% en poids d'un premier matériau à cristal liquide comportant au moins un des composés à cristaux liquides représenté par la formule générale:

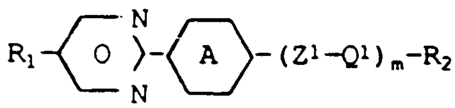

(I)

dans laquelle $R_1$ représente un groupe R; $R_2$ représente R ou OR; R étant dans chaque cas indépendamment un groupe alkyle à chaîne droite, possédant jusqu'à 12 atomes de carbone, dans lequel un ou deux parmi les groupes non-adjacents $CH_2$ peuvent être remplacés par -O- et/ou -CH = CH-, deux atomes d'oxygène n'étant pas directement liés l'un à l'autre,
A est du 1,4-phénylène ou du trans-1,4-cyclohexylène,
$Z^1$ est -CO-O-, -O-CO-, $-CH_2-O-$, $-OCH_2-$, $-CH_2CH_2-$ ou bien une simple liaison,
$Q^1$ est du 1,4-phénylène ou du trans-1,4-cyclohexylène, et m est 0, 1 ou 2.

(b) moins de 10% en poids d'un second matériau à cristaux liquides comportant un ou plus d'un composé à cristaux liquides présentant une anisotropie diélectrique positive distincte ( $\Delta\epsilon \geqq +3$); et

(c) moins de 90% en poids d'un troisième matériau à cristaux liquides comportant au moins un composé à cristaux liquides possédant une anisotropie diélectrique négative ou pratiquement neutre,

le second matériau à cristaux liquides pouvant être omis si le premier et le troisième matériaux à cristaux liquides sont choisis d'une manière telle que le mélange résultant présente un $\Delta\epsilon$ légèrement positif et un $\Delta\epsilon/\epsilon_\perp$ dans la gamme de 0,04 à 0,3.